(19) Europäisches Patentamt
European Patent Office
Office européen des brevets

(11) EP 2 113 526 A1

(12) **EUROPEAN PATENT APPLICATION**
published in accordance with Art. 153(4) EPC

(43) Date of publication:
**04.11.2009 Bulletin 2009/45**

(21) Application number: **08711843.6**

(22) Date of filing: **22.02.2008**

(51) Int Cl.:
***C08G 65/44*** *(2006.01)* ***C08G 63/78*** *(2006.01)*
***C08G 64/02*** *(2006.01)* ***C08G 73/10*** *(2006.01)*
***C08L 69/00*** *(2006.01)* ***C08L 71/12*** *(2006.01)*

(86) International application number:
**PCT/JP2008/053075**

(87) International publication number:
**WO 2008/102876 (28.08.2008 Gazette 2008/35)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.02.2007 JP 2007041776**
**22.02.2007 JP 2007041779**

(71) Applicant: **Asahi Kasei Chemicals Corporation**
**Tokyo 101-8101 (JP)**

(72) Inventors:
- **YAMAGUCHI, Toru**
**Tokyo 100-8440 (JP)**
- **KONDO, Tomohiro**
**Tokyo 100-8440 (JP)**
- **MITSUI, Akira**
**Tokyo 100-8440 (JP)**

(74) Representative: **HOFFMANN EITLE**
**Patent- und Rechtsanwälte**
**Arabellastrasse 4**
**81925 München (DE)**

# (54) POLYMER-(ORGANO)CLAY COMPLEX, COMPOSITION COMPRISING THE COMPLEX, SHEET-LIKE MATERIAL COMPRISING THE COMPLEX OR COMPOSITION, AND METHOD FOR PRODUCTION OF POLYMER-(ORGANO)CLAY COMPLEX

(57) Disclosed are: a high-performance polyphenylene ether-organoclay complex which is significantly improved in fire retardancy, durability (e.g., light resistance, chemical resistance, impact resistance), an ability of being extruded into a sheet and the like; and others. The polyphenylene ether-organoclay complex can be produced by: preparing a mixture comprising a solvent, a catalyst, a phenolic compound and an organoclay, wherein the organoclay is contained in an amount of 0.1 to 20 parts by mass relative to 100 parts by mass of the phenolic compound; contacting the mixture with an oxygen-containing gas to cause the oxidative polymerizationof the phenolic compound; and removing the solvent and the catalyst from the resulting polymerization mixture. This method is applicable to the production of a complex of an organoclay with other polymers such as an aromatic polycarbonate, a polyether imide and a polyacrylate.

FIG.3

<One-dimensional average profile schematic view>

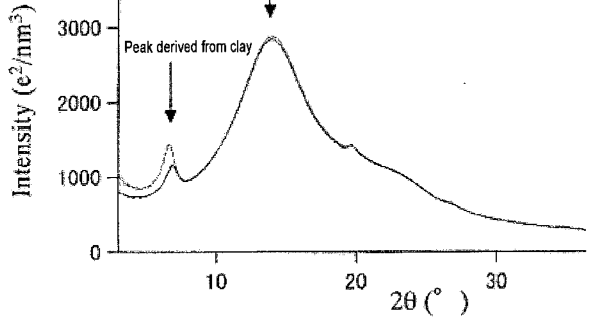




Printed by Jouve, 75001 PARIS (FR)

## Description

Technical Field

The present invention relates to a polymer-(organo)clay composite which is improved in flame retardancy, and durability such as light resistance, chemical resistance and impact resistance, a composition comprising the composite, a sheet-like material comprising the composite or the composition, and a process capable of producing such a polymer-(organo)clay composite. In particular, the present invention relates to a process for production of a polymer-(organo) clay composite in which the composite process is carried out by adding a specific amount of (organo)clay to a specific polymerization monomer in the polymerization process.

Background Art

For the purpose of improving the mechanical strength and durability of a thermoplastic resin, a composite process has been conventionally carried out by adding a clay (lamellar silicate mineral) or an organoclay (organized lamellar silicate mineral) into the thermoplastic resin. As the composite process during the polymerization of the thermoplastic resin and the organoclay, for example, Patent Document 1 describes a process for production of a composite material which comprises a contact process of forming a composite by contacting lamellar clay mineral having a cation exchange capacity of 50 to 200 meq/100 g with a swelling agent in the presence of a dispersion medium, a mixing process of mixing the composite containing the dispersion medium with a monomer of a polymer, and a polymerization process of polymerizing the monomer of the polymer in the resulting mixture. However, the specific description in Patent Document 1 only relates to a polymer having a high polarity which is derived from a dispersion medium having a high polarity and a monomer having a high polarity. That is, in Patent Document 1, no specific description is disclosed about a thermoplastic resin composite material which is derived from a thermoplastic resin having a low polarity and an (organo) clay. On the other hand, for example, Patent Document 2 describes an example in which the composite process with the organoclay is applied to a polymer having a low polarity. However, the specific description in Patent Document 2 only relates to a vinyl-based monomer. That is, in Patent Document 2, no specific description is disclosed about a thermoplastic resin exposed to a high temperature during processing. In addition, since the technique described in Patent Document 2 requires a vinyl-based monomer and a specific onium ion having a vinyl group, the technique was not considered to apply to a thermoplastic resin obtained by polymerizing a non-vinyl based monomer.

On the other hand, Patent Documents 3 and 4 also describe a technique of the composite process of both an organoclay and a monomer by polymerizing the monomer in the presence of the organoclay. However, in Patent Documents 3 and 4, no specific description is disclosed about the application to a thermoplastic resin exposed to a high temperature during processing. Furthermore, in both techniques described in Patent Documents 3 and 4, a special treatment is required for dispersing the organoclay in the monomer. Specifically, in the technique described in Patent Document 3, it is required to use an organoclay treated with a special organizing agent having a functional group binding to the clay at the side chain of the molecular chain. In the technique described in Patent Document 4, it is required to form a high-temperature and high-pressure fluid or supercritical fluid under heating and pressurizing. For those reasons, the techniques described in Patent Documents 3 and 4 are not convenient and versatile and are inferior in productivity and economy.

Meanwhile, Patent Documents 5 and 6 describe the composite process of a thermoplastic resin having a glass transition temperature (Tg) of 150°C or higher and an organoclay during melt kneading, and in particular, it is described a process of melt-kneading a polyphenylene ether and an organoclay during extrusion (a so-called, melt intercalation method). And currently, regarding the technique of the composite process of the organoclay and the polyphenylene ether, this type of melt intercalation method has been under development.

Patent Document 1: Japanese Patent Laid-Open No. S64-9202
Patent Document 2: Japanese Patent Laid-Open No. S63-215775
Patent Document 3: Japanese Patent Laid-Open No. 2000-136308
Patent Document 4: Japanese Patent Laid-Open No. 2004-307720
Patent Document 5: Japanese Patent Laid-Open No. H07-324160
Patent Document 6: Japanese Patent Laid-Open No. 2003-26915

Disclosure of the Invention

Problems to be Solved by the Invention

However, it was extremely difficult to obtain a high-performance composite material which is sufficiently improved in flame retardancy, and durability such as light resistance, chemical resistance and impact resistance by the composite process with the melt intercalation method.

The present invention is made to solve the above problems and an object of the present invention is to provide a high-performance polyphenylene ether-organoclay composite which is significantly improved in flame retardancy, durability such as light resistance, chemical resistance and impact resistance, sheet-extruding property and the like, a composition using the composite, a sheet-like material using the composite or the composition. In addition, another object of the present invention is to provide a process for production capable of conveniently producing such a high-performance polyphenylene ether-organoclay composite which is excellent in productivity and economy, while employing a technique of the composite process by adding an organoclay during the polymerization of polyphenylene ether.

Furthermore, another object of the present invention is to provide a high-performance polymer-(organo)clay composite which is significantly improved in flame retardancy, durability such as light resistance, chemical resistance and impact resistance, sheet-extruding property and the like by applying the above process for production of the polyphenylene ether-organoclay composite, and a composition and a sheet-like material using the polymer-(organo)clay composite. In addition, in the same manner as described above, another object of the present invention is to provide a process capable of conveniently producing such a high-performance polymer-(organo)clay composite which is excellent in productivity and economy by applying the process of production of the polyphenylene ether-organoclay composite, while employing a technique of the composite process by addition to an (organo)clay during the polymerization of a polymer.

Means for Solving the Problems

As a result of earnest studies to solve the above problems, the present inventors have found that a high-performance polymer-(organo)clay composite may be obtained, which is significantly improved in flame retardancy, and durability such as light resistance, chemical resistance and impact resistance, compared to a composite material obtained by a conventional melt intercalation method, by optimizing the amount added of a monomer component used for the polymerization and an (organo)clay added in the polymerization system, in the technique of the composite process by adding the (organo)clay during the polymerization of a polymer, and have completed the present invention. In addition, the present inventors have also found that further high performance is achieved without significantly reducing the physical properties such as flowability and toughness with a small amount added by optimizing the catalyst component, catalyst composition, and solvent component to be used and the combination thereof as needed, compared to a composite material obtained by a conventional melt intercalation method, and generation conditions of gases and adhered materials during sheet extrusion molding are significantly improved, and have completed the present invention.

That is, the present invention provides the following <1> to <25>.

<1> A process for production of a polyphenylene ether-organoclay composite by oxidative polymerization of a phenolic compound using an oxygen-containing gas in the presence of a solvent and a catalyst, the process comprising:

a step of preparing a mixture comprising the solvent, the catalyst, the phenolic compound and an organoclay in which the organoclay is contained in an amount of 0.1 to 20 parts by mass based on 100 parts by mass of the phenolic compound;
a step of oxidatively-polymerizing the phenolic compound by contacting the mixture with the oxygen-containing gas; and
a step of separating the solvent and the catalyst from the resulting polymerization mixture to obtain the polyphenylene ether-organoclay composite.

<2> The process for production of the polyphenylene ether-organoclay composite described in the above <1>, wherein the catalyst contains a copper compound, a halogen compound and a diamine compound represented by the following general formula (1).

[Formula 1]

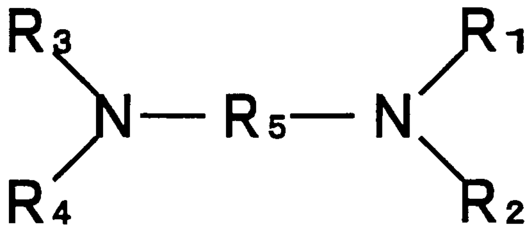

· · · (1)

(wherein $R_1$, $R_2$, $R_3$ and $R_4$ each independently represents a hydrogen atom or a linear or branched alkyl group having 1 to 6 carbon atoms with the proviso that all of $R_1$ to $R_4$ do not represent a hydrogen atom at the same time. $R_5$ represents a linear or methyl-branched alkylene group having 2 to 5 carbon atoms.)

<3> The process for production of the polyphenylene ether-organoclay composite described in the above <1> or <2>, wherein the organoclay is lamellar silicate organized with organic onium salt.

<4> The process for production of the polyphenylene ether-organoclay composite described in any one of the above <1> to <3>,
wherein the organoclay is lamellar silicate organized with quaternary ammonium salt.

<5> The process for production of the polyphenylene ether-organoclay composite described in any one of the above <1> to <4>,
wherein the organoclay is bentonite or hectorite organized with quaternary ammonium salt having at least one aromatic ring in a molecular structure.

<6> The process for production of the polyphenylene ether-organoclay composite described in any one of the above <1> to <5>,
wherein the organoclay has an ignition loss (the ratio of the weight loss after heating at 600°C for 5 hours to the original mass) of 40 to 60% by mass.

<7> The process for production of the polyphenylene ether-organoclay composite described in any one of the above <1> to <6>,
wherein the organoclay has an interlayer distance of 20 to 60 Å.

<8> The process for production of the polyphenylene ether-organoclay composite described in any one of the above <1> to <7>,
wherein the phenolic compound is 2,6-dimethylphenol or a mixture of 2,6-dimethylphenol and 2,3,6-trimethylphenol.

<9> The process for production of the polyphenylene ether-organoclay composite described in any one of the above <2> to <8>,
wherein the halogen compound is an ammonium chloride compound or an ammonium bromide compound.

<10> The process for production of the polyphenylene ether-organoclay composite described in any one of the above <2> to <8>,
wherein the halogen compound is halogenated tri-n-octylmethylammonium.

<11> The process for production of the polyphenylene ether-organoclay composite described in any one of the above <2> to <10>,
wherein the diamine compound is N,N'-di-t-butylethylenediamine or N,N,N',N'-tetramethylpropanediamine.

<12> The process for production of the polyphenylene ether-organoclay composite described in any one of the above <1> to <11>,
wherein the mixture contains the organoclay in an amount of 0.5 to 10 parts by mass based on 100 parts by mass of the phenolic compound.

<13> The process for production of the polyphenylene ether-organoclay composite described in any one of the above <1> to <11>,
wherein the mixture contains the organoclay in an amount of 1 to 5 parts by mass based on 100 parts by mass of the phenolic compound.

<14> The process for production of the polyphenylene ether-organoclay composite described in any one of the above <1> to <13>,
wherein the solvent is an aromatic hydrocarbon and the polymerization mixture is dissolved the polyphenylene ether in the aromatic hydrocarbon.

<15> The process for production of the polyphenylene ether-organoclay composite described in any one of the

above <1> to <13>,
wherein the solvent is a mixed solvent of an aromatic hydrocarbon and an alcohol having 1 to 6 carbon atoms, and the polymerization mixture is a slurry in which the polyphenylene ether is precipitated in the mixed solvent.
<16> The process for production of the polyphenylene ether-organoclay composite described in the above <14> or <15>,
wherein the aromatic hydrocarbon is at least one kind selected from the group consisting of toluene, xylene and ethylbenzene.
<17> The process for production of the polyphenylene ether-organoclay composite described in the above <15> or <16>,
wherein the alcohol is at least one kind selected from the group consisting of methanol, ethanol, propanol, butanol and pentanol, and a mass ratio of the aromatic hydrocarbon to the alcohol is from 90:10 to 5:95.
<18> The process for production of the polyphenylene ether-organoclay composite described in any one of the above <1> to <17>,
wherein in the step of preparing the mixture, the organoclay is added in the solvent and/or the phenolic compound in advance so as to disperse the organoclay.
<19> The process for production of the polyphenylene ether-organoclay composite described in any one of the above <1> to <18>,
wherein in the step of preparing the mixture, the organoclay is added in the phenolic compound heated at 50 to 200°C in advance so as to disperse the organoclay.
<20> A polyphenylene ether-organoclay composite obtainable by the production process described in any one of the above <1> to <19>,
wherein a reduced viscosity (as measured in 0.5 g/dl chloroform solution at 30°C using an Ubbelohde viscometer) of the polyphenylene ether is in a range of 0.2 to 0.9 dl/g.
<21> A composition comprising the polyphenylene ether-organoclay composite described in the above <20> and a thermoplastic resin.
<22> A sheet-like material comprising the polyphenylene ether-organoclay composite described in the above <20> or the composition described in the above <21>.

<23> A polyphenylene ether-(organo)clay composite characterized by satisfying the following formula (I) when an X-ray diffraction measurement is made by directing an X-ray from the cross-sectional surface (the thickness direction) of a flat plate obtainable by press molding, a normal line direction of a pressed flat plate of the resulting two dimensional scattering pattern is assumed to be 0°, a maximum value of a peak derived from the (organo)clay in the one-dimensional profile calculated by sector averaging in a range of -15° to 15° is present in a range of 2θ = 3° to 7°, and a ratio of the peak area derived from the (organo)clay is defined as a (%), a ratio of the peak area derived from the polyethylene ether is defined as b (%) when a total of the peak area derived from the (organo)clay and the peak area derived from the polyethylene ether is assumed to be 100%, and a ratio of the (organo)clay is defined as $\alpha$ when a total composite mass of the polyethylene ether and the (organo)clay is defined as 1.

$$(a/\alpha)/[b/(1-\alpha)] \leq 5 \ldots (I)$$

<24> A process for production of a polymer-(organo)clay composite, the process comprising:

a step of preparing a mixture containing a monomer having an aromatic ring in a monomer unit and an (organo)clay in which the (organo)clay is contained in an amount of 0.1 to 20 parts by mass based on 100 parts by mass of the monomer; and
a step of polymerizing the monomer in the mixture to prepare a thermoplastic resin having a glass transition temperature (Tg) of 150°C or higher and having an aromatic ring in a constitutional unit.

<25> The process for production of the polymer-(organo)clay composite described in the above <24>,
wherein the thermoplastic resin is at least one kind selected from the group consisting of polyphenylene ether, aromatic polycarbonate, polyetherimide and polyarylate.
Here, in the present description, the term "(organo)clay" is used as a term that includes a clay and an organoclay. In addition, the term "sheet-like material" is used as a term that includes a sheet and a film.
When the present invention configured as above was conducted by the present inventors, it was found to be able to easily obtain a high-performance polymer-(organo)clay composite which is significantly improved in flame retardancy, durability such as light resistance, chemical resistance and impact resistance, sheet-extruding property and the

like, without impairing productivity and economy. The reason is not clear but may be presumed as follows.
In the present invention, a special environment is formed in which a monomer component and a solvent or the like to be added where necessary are relatively easily intercalated in the interlayer of the (organo)clay by optimizing the type of the (organo)clay and the monomer component which is a raw material of a thermoplastic resin to be complexated and the blending ratio between the monomer component and the (organo)clay, thereby resulting in the occurrence of the variation in the interlayer distance of the (organo)clay or interlayer peeling or the like and realizing pulverization of the (organo)clay or homogenization of the dispersion of the (organo)clay or the like. Thus, it is presumed that a high-performance polymer-(organo)clay composite which is significantly improved in various performances was obtained. In addition, in the polymerization system (polymerization environment) of the present invention, a special environment is formed in which the interaction between a catalyst to be added where necessary and the (organo)clay is suppressed by optimizing the type of the monomer component and the blending ratio between the monomer component and the (organo)clay. Thus, the decrease of polymerization activity is suppressed even under the coexistence of the (organo) clay, and the decrease of the molecular weight or the homogenization or the like of a polymerization polymer is suppressed. As a result, it is presumed that a high-performance polymer-(organo)clay composite which is significantly improved in various performances was obtained. However, the action is not limited to the above.

## Advantages of the Invention

According to the present invention, there is easily obtained a high-performance polymer-(organo)clay composite which is significantly improved in flame retardancy, durability such as light resistance, chemical resistance and impact resistance, sheet-extruding property and the like, without requiring a special process essential for a conventional technique and without excessively impairing the properties inherent to a thermoplastic resin such as a polyphenylene ether, for example, physical properties such as flowability and toughness, thereby enabling to increase productivity and economy.
In addition, the present invention provides a remarkable fire retardant effect, light resistance improving effect, chemical resistance improving effect with a smaller addition amount of the (organo)clay than that in the case of production by a melt intercalation method, and also provides an effect of significantly suppressing the generation of gases or adhered materials during sheet extrusion molding. These facts are clear from the comparison of the polymer-(organo)clay composite which is obtained by being complexated by the polymerization method of the present invention with the polymer-(organo)clay composite obtained by a melt intercalation method. Therefore, it is presumed that the composites obtained by both the production methods are significantly different in the dispersion state of the (organo)clay in the composites. Accordingly, the composite obtained by the present invention is also a novel composite.

## Best Mode for Carrying Out the Invention

Hereinafter, the embodiments of the present invention will be described. In addition, the present invention is not limited to the embodiments and can be performed in various embodiments as long as the gist of the present invention is not deviated.

### <Polyphenylene Ether-Organoclay Composite>

Firstly, there will be described a polyphenylene ether-organoclay composite and a process of production thereof, which is a suitable embodiment of the present invention.
The polyphenylene ether-organoclay composite of the present embodiment may be obtained by using a phenolic compound as a monomer and oxidatively polymerizing the phenolic compound by contacting with an oxygen-containing gas in the presence of a predetermined amount of an organoclay, a solvent and a catalyst. When such a polymerization method is employed, it is preferable to prepare a mixture (dispersed material) containing a monomer, a predetermined amount of an organoclay, a solvent and a catalyst in advance and then contacting the mixture with the oxygen-containing gas to oxidatively polymerize the monomer in the mixture. In addition, as a polymerization method of a polyphenylene ether, there are known a slurry method in which a polymer is precipitated in the course of polymerization and the polymerization is further proceeded, and a solution polymerization in which the polymerization is proceeded in a state where a polymer is not precipitated but is dissolved in the solvent. If either of the methods is employed, the polyphenylene ether-organoclay composite of the present invention may be obtained.
As the phenolic compound used for the polymerization of a polyphenylene ether, preferred is a compound having a structure represented by the following general formula (2).

[Formula 2]

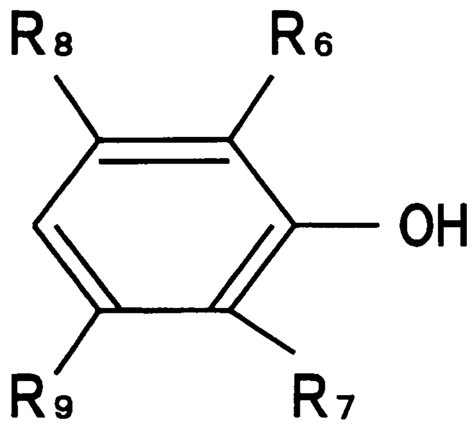

· · · (2)

(wherein $R_6$, $R_7$, $R_8$ and $R_9$ each independently represents a substituent, $R_6$ represents an alkyl group, a substituted alkyl group, an aralkyl group, a substituted aralkyl group, an aryl group, a substituted aryl group, an alkoxy group or a substituted alkoxy group, and $R_7$, $R_8$ and $R_9$ represent the same as $R_6$ or represent a hydrogen atom or a halogen atom.)

As the specific example of the phenolic compound having a structure represented by the general formula (2), there may be mentioned 2,6-dimethylphenol, 2,3,6-trimethylphenol, 2-methyl-6-ethylphenol, 2,6-diethylphenol, 2-ethyl-6-n-propylphenol, 2-methyl-6-chlorphenol, 2-methyl-6-bromophenol, 2-methyl-6-isopropylphenol, 2-methyl-6-n-propylphenol, 2-ethyl-6-bromophenol, 2-methyl-6-n-butylphenol, 2,6-di-n-propylphenol, 2-ethyl-6-chlorphenol, 2-methyl-6-phenylphenol, 2,6-diphenylphenol, 2,6-bis(4-fluorophenyl)phenol, 2-methyl-6-tolylphenol, 2,6-ditolylphenol and the like. These compounds may be used alone or in combination with two or more kinds. In addition, in using the above-mentioned compounds, even if a small amount of phenol, o-cresol, m-cresol, p-cresol, 2,4-dimethylphenol, 2-ethylphenol and the like is contained, it is substantially not a problem. Among these phenolic compounds, 2,6-dimethylphenol and 2,3,6-trimethylphenol are especially important in industry, and a homopolymer of 2,6-dimethylphenol obtained by using these compounds and a copolymer of 2,6-dimethylphenol and 2,3,6-trimethylphenol are important materials in industry.

A clay is lamellar silicate having a cation exchange capacity, and in the present embodiment, it is a precursor of an organoclay to be complexated with a polyphenylene ether (in addition, in the embodiment of a polyphenylene ether-clay composite described later, it is used as a raw material of a composite). As such lamellar silicate, preferably used is a 2:1 type lamellar silicate in which an octahedron sheet structure containing Al, Mg, Li and the like is sandwiched between two $SiO_4$ tetrahedro sheet structures. One layer which is a unit structure of the lamellar silicate has a thickness of generally approximately 9.5 angstroms. The specific example of the clay includes, for example, a smectite-based clay mineral such as montmorillonite, hectorite, fluorine hectorite, saponite, beidellite and stevensite; a swelling synthetic mica such as Li-type fluorine teniolite, Na-type fluorine teniolite, Na-type tetrasilicic fluorine mica and Li-type tetrasilicic fluorine mica; vermiculite, fluorine vermiculite and halloysite. The clay may be natural or synthetic. Among these lamellar silicates, preferably used are a smectite-based clay mineral such as bentonite, montmorillonite and hectorite; and a swelling synthetic mica such as Li-type fluorine teniolite, Na-type fluorine teniolite and Na-type tetrasilicic fluorine mica, and especially preferably used are bentonite, montmorillonite and hectorite. In addition, the lamellar silicate has a cation exchange capacity (CEC) of generally 30 meq/100 g or more, preferably 50 meq/100 g or more and more preferably 80 meq/100 g or more. If the lamellar silicate has a cation exchange capacity of less than 30 meq/100 g, the intercalation amount of the organic onium ion in the interlayer of the lamellar silicate becomes insufficient and the dispersion property in the polymer to be complexated is deteriorated, thereby deteriorating the molding surface appearance and fire retardant improving efficiency. The cation exchange capacity may be determined by the measurement of the adsorbed amount of methylene blue.

An organoclay is a compound produced by ion-exchange reaction between organic onium salt and lamellar silicate having a negative layer lattice and an exchangeable cation by using the clay (lamellar silicate having cation exchange capacity) as a host and the organic onium salt as a guest, and means a compound in which the onium ions

are inserted (intercalated) in the interlayer of the lamellar silicate. The cation exchange reaction may be carried out, for example, according to well-known methods which are described in Japanese Patent Publication No. S61-5492, Japanese Patent Laid-Open No. S60-42451 and the like, and as the preferred reaction conditions and the like, there may be applied the reaction methods and purification methods in case of the quaternary ammonium salt intercalation, which are described, for example, in Japanese Patent Application No. H5-245199 and Japanese Patent Application No. H5-245200.

As the specific example of the organic onium salt, there may be mentioned, for example, an organic ammonium salt, an organic phosphonium salt, an organic sulfonium salt and an organic onium salt derived from a heteroaromatic ring. An organic compound is introduced between the negatively charged lamellar silicate layers by these organic onium salts, thus leading to intercalation.

Among these onium salts, from the viewpoint of the effectiveness of the hydrocarbon structure contributing to the hydrophobization of the silicate interlayer, preferred is a quaternary ammonium salt, and the specific example includes, for example, a quaternary ammonium having an alkyl group having 12 or more carbon atoms in the molecule such as trimethyldodecylammonium, trimethyltetradecylammonium, trimethylhexadecylammonium, trimethyloctadecylammonium, triethyldodecylammonium, triethyltetradecylammonium, triethylhexadecylammonium and triethyloctadecylammonium; a quaternary ammonium having two alkyl groups having 12 or more carbon atoms in the molecule such as dimethyldidodecylammonium, dimethylditetradecylammonium, dimethyldihexadecylammonium, dimethyldioctadecylammonium, diethtyldidodecylammonium, diethylditetradecylammonium, diethyldihexadecylammonium and diethyldioctadecylammonium; and a quaternary ammonium having an aromatic ring such as methylbenzyldihexadecylammonium, dibenzyldihexadecylammonium, trimethylbenzylammonium, trimethylphenylammonium, benzyl methyl dihydrogenated tallow ammonium and benzyl dimethyl dehydrogenated tallow ammonium.

The organoclay has an interlayer distance of preferably from 20 to 100 Å and more preferably from 20 to 60 Å. From the viewpoint of the sufficient layer peelability in the polymerization solvent, the organoclay preferably has an interlayer distance of 20 Å or more, and from the viewpoint of the handling property and the like, the organoclay preferably has an interlayer distance of 100 Å or less. In addition, the interlayer distance of the organoclay may be determined by the measurement of the d(001) plane by X-ray diffraction.

The organoclay has an ignition loss of preferably from 30 to 60% by mass and more preferably from 40 to 60% by mass. From the viewpoint of the sufficient layer peelability in the polymerization solvent, the organoclay preferably has an ignition loss of 30% by mass or more, and from the viewpoint of the maintenance of the appearance of a composite and a composition obtained by the composite, the organoclay preferably has an ignition loss of 60% by mass or less. In addition, an ignition loss of the organoclay may be determined by calculating the ratio of the weight loss after heating at 600°C for 5 hours to the original mass.

As the blending ratio between the phenolic compound which is a monomer component and the organoclay in the above mixture, the organoclay is incorporated in amount of preferably 0.1 to 20 parts by mass, more preferably 0.3 to 15 parts by mass, further more preferably 0.5 to 10 parts by mass, and especially preferably 1 to 5 parts by mass, based on 100 parts by mass of the phenolic compound. From the viewpoint of imparting sufficient flame retardancy and improving light resistance, the organoclay is preferably added in an amount of 0.1 parts by mass or more based on 100 parts by mass of the phenolic compound, and from the viewpoint of keeping the polymerization activity during production, the organoclay is preferably added in an amount of 20 parts by mass or less based on 100 parts by mass of the phenolic compound. In the preparation of the mixture, it is preferable that the organoclay is dispersed by adding it in the solvent and/or the phenolic compound described later, in advance, or the organoclay is dispersed by adding it in the phenolic compound heated at 50 to 200°C in advance.

As a preferably available catalyst when the phenolic compound is oxidatively polymerized using a catalyst, a solvent and an oxygen-containing gas in the presence of the organoclay, there may be mentioned a copper compound, a chlorine compound, a bromine compound, a diamine compound, a tertiary monoamine compound, a secondary monoamine compound and the like. These compounds may be used alone or in combination with two or more kinds.

As the copper compound, the chlorine compound and the bromine compound, the following compounds may be exemplified. As the copper compound, there may be exemplified, for example, by a cuprous compound, a cupric compound and a mixture thereof. Here, the cupric compound may be exemplified, for example, by cupric chloride, cupric bromide, cupric sulfate and cupric nitrate. In addition, the cuprous compound may be exemplified, for example, by cuprous chloride, cuprous bromide, cuprous sulfate and cuprous nitrate. Among the cuprous and cupric compounds, the preferred compounds are cuprous chloride, cupric chloride, cuprous bromide and cupric bromide. In addition, these copper salts may be synthesized from a halogen or an acid which reacts with oxides, carbonates, hydroxides and the like, and may be obtained, for example, by mixing cuprous oxide and hydrogen bromide (solution thereof). As the above copper compounds, especially preferred is a cuprous compound. Further, the above copper compounds may be used alone or in combination with two or more kinds.

The specific example of the chlorine compound includes, for example, hydrogen chloride, sodium chloride, potassium chloride, and an ammonium chloride compound such as tetramethylammonium chloride, tetraethylammonium chloride and tri-n-octylmethylammonium chloride. These compounds may be used in the form of an aqueous solution

or a solution using an appropriate solvent. These chlorine compounds may be used alone or in combination with two or more kinds. A preferred combination of the copper compound and the chlorine compound above is cupric chloride and ammonium chloride compound, and more preferred are cupric chloride and tri-n-octylmethylammonium chloride. The amount used of each compound in these combinations is not particularly limited, but the compound is preferably used so that the chlorine atom will be 2-fold or more and 10-fold or less based on the molar amount of the copper atom. In addition, the amount used of the chlorine compound is preferably adjusted in the range of 0.02 to 0.06 moles of the copper atom based on 100 moles of the phenolic compound.

The specific example of the bromine compound includes, for example, hydrogen bromide, sodium bromide, potassium bromide and ammonium bromide compound such as tetramethylammonium bromide and tetraethylammonium bromide. These compounds may be used in the form of an aqueous solution or a solution using an appropriate solvent. These bromine compounds may be used alone or in combination with two or more kinds. A preferred combination of the copper compound and the bromine compound is cuprous oxide and hydrogen bromide, cuprous oxide, hydrogen bromide and ammonium bromide, and halogenated copper compound and ammonium bromide compound. The amount used of each compound in these combinations is not particularly limited, it is preferably used so that the bromine atom will be 2-fold or more and 10-fold or less based on the molar amount of the copper atom. In addition, the amount used of the bromine compound is preferably adjusted in the range of 0.02 to 0.6 moles of the copper atom based on 100 moles of the phenolic compound.

The specific example of the diamine compound includes, for example, but is not limited to, N,N'-di-t-butylethylenediamine, N,N'-di-t-acylethylenediamine, N,N'-diisopropylethylenediamine and N,N,N',N'-tetramethyl-1,3-diaminopropane. These diamine compounds may be used alone or in combination with two or more kinds. The amount used of the diamine compound is not particularly limited, but the compound is preferably used in an amount of 0.05 to 15 moles based on 100 moles of the phenolic compound above.

In using the above catalyst, it is preferable to coexist a secondary monoamine compound or a tertiary monoamine compound as a component of the catalyst.

The specific example of the secondary monoamine compound includes, for example, but is not limited to, in addition to dimethylamine, diethylamine, di-n-propylamine, di-i-propylamine, di-n-butylamine, di-i-butylamine, di-t-butylamine, dipentylamines, dihexylamines, dioctylamines, didecylamines, dibenzylamines, methylethylamine, methylpropylamine, methylbutylamine and cyclohexylamine, for example, an N-(substituted or non-substituted)alkanolamine such as N-phenylmethanolamine, N-phenylethanolamine, N-phenylpropanolamine, N-(m-methylphenyl)ethanolamine, N-(p-methylphenyl)ethanolamine, N-(2',6'-dimethylphenyl)ethanolamine and N-(p-chlorophenyl)ethanolamine, and an N-(hydrocarbon-substituted)aniline such as N-ethylaniline, N-butylaniline, N-methyl-2-methylaniline, N-methyl-2,6-dimethylaniline and diphenylamine. These secondary monoamine compounds may be used alone or in combination with two or more kinds. The amount used of the secondary monoamine compound is not particularly limited, but the compound is preferably used in an amount of 0 to 15 moles based on 100 moles of the phenolic compound.

The specific example of the tertiary monoamine compound includes, for example, but is not limited to, an aliphatic tertiary amine (including an alicyclic tertiary amine), and more specifically includes, for example, trimethylamine, triethylamine, tripropylamine, tributylamine, triisobutylamine, dimethylethylamine, dimethylpropylamine, allyldiethylamine, dimethyl-n-butylamine, diethylisopropylamine and N-methylcyclohexylamine. These tertiary monoamine compounds may be used alone or in combination with two or more kinds. The amount used of the tertiary monoamine compound is not particularly limited, but it is preferably used in an amount of 0 to 15 moles based on 100 moles of the phenolic compound.

A preferred combination of the catalysts is a copper compound, a halogen compound and a diamine compound, and from the viewpoint of suppressing the deterioration of the catalyzation activity during polymerization, a more preferred combination is a copper compound, a halogen compound and a diamine compound represented by the following general formula (3). As the diamine compound, especially preferably used is N,N'-di-t-butylethylenediamine or N,N,N',N'-tetramethylpropanediamine.

[Formula 3]

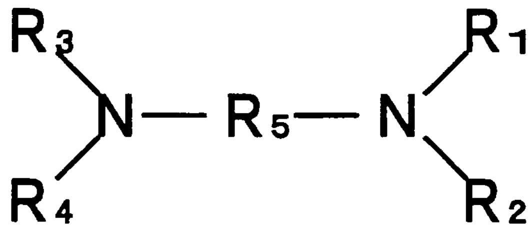

· · · (3)

(wherein $R_1$, $R_2$, $R_3$ and $R_4$ each independently represents a hydrogen atom or a linear or branched alkyl group having 1 to 6 carbon atoms except when all of them represent a hydrogen atom at the same time. $R_5$ represents a linear or methyl-branched alkylene group having 2 to 5 carbon atoms.)

The solvent used in polymerizing a polyphenylene ether is not particularly limited, but preferred is one which is difficult to be oxidized compared to the monomer to be oxidized and has almost no reactivity with various radicals which are presumed to be formed during the reaction process, and more preferred is one which can dissolve the phenolic compound above having a relatively low molecular weight and further can dissolve the portion or the whole of the catalyst. The solvent may be a singular solvent consisting of one kind of solvent or a mixed solvent consisting of two or more kinds of solvents, and for example, preferably used is a mixed solvent in which a good solvent and a poor solvent for the polyphenylene ether are used together.

The specific example of the preferred solvent includes, for example, an aromatic hydrocarbon such as benzene, toluene, xylene and ethyl benzene; a halogenated hydrocarbon such as chloroform, methylene chloride, 1,2-dichlorethane, trichlorethane, chlorbenzene, dochlorbenzene and trichlorbenzene; and a nitro compound such as nitrobenzene. These compounds may be used as a good solvent for a polyphenylene ether. These may be used alone or in combination with two or more kinds. Among these, especially preferably used are an aromatic hydrocarbon-based solvent such as toluene, xylene and ethylbenzene as a singular solvent or as a good solvent for a polyphenylene ether.

In addition, the specific examples of the other preferred solvents include, for example, aliphatic hydrocarbons such as pentane, hexane, heptanes, cyclohexane and cycloheptane; ethers such as tetrahydrofuran and diethylether; alcohols such as methanol, ethanol, propanol and butanol; ketones such as acetone and methyl ethyl ketone; esters such as ethyl acetate and ethyl formate; amides such as dimethylformamide; and sulfoxides such as dimethyl sulfoxide, and these compounds may be used as a poor solvent for a polyphenylene ether. These compounds may be used alone or in combination with two or more kinds. Among these, especially preferably used are methanol, ethanol, propanol, butanol and pentanol as a poor solvent for a polyphenylene ether.

In the polymerization system in oxidatively polymerizing the phenolic compound, especially preferably used are an aromatic hydrocarbon such as toluene, xylene and ethylbenzene as a good solvent and an alcohol having 1 to 6 carbon atoms, more specifically, methanol, ethanol, propanol, butanol, pentanol and the like as a poor solvent. In addition, especially preferably used is a mixed solvent of these good solvents and poor solvents. The blending ratio between the good solvent and the poor solvent is preferably 100:0 to 5:95 and more preferably 90:10 to 5:95 in mass ratio. The polymerization process is changed depending on the blending ratio of the good solvent and the poor solvent, for example, if the ratio of the good solvent is increased, solution polymerization tends to predominate in which a polymer is dissolved in the reaction solvent, and if the ratio of the poor solvent increased, precipitation polymerization tends to predominate in which a polymer is precipitated (dispersed) in the reaction solvent with the progress of the reaction. In the present embodiment, a preferred polymerization method is a precipitation polymerization method. In the precipitation polymerization method, it is indispensable to use a poor solvent for a polyphenylene ether. In addition, the polymerization unit operation may be performed by means of either a batch polymerization method or a continuous polymerization method.

The specific example of the oxygen-containing gas which is required in oxidatively polymerizing the phenolic compound is not particularly limited so long as it is a gas containing oxygen, but includes, for example, an oxygen gas and a mixed gas of an oxygen gas and an inert gas which is controlled at any oxygen concentration. Air may be used as the oxygen-containing gas. As the inert gas, any inert gas can be used if it has no large influence on the polymerization reaction, and nitrogen is typically exemplified.

The polymerization temperature is preferably from 0 to 80°C, more preferably from 20 to 60°C, further more preferably from 30 to 50°C and especially preferably from 35 to 45°C because the reaction is difficult to proceed at an excessively low temperature and the reaction selectivity is decreased at an excessively high temperature.

There is no particular limitation on the post-treatment method after completion of the polymerization reaction, and a well-known treatment method may be employed. For example, the polyphenylene ether-organoclay composite may be collected by an operation of adding a catalyst deactivator such as ethylenediaminetetraacetic acid (EDTA) and a salt thereof, or nitrilotriacetic acid and a salt thereof into the polymerization mixture as it is or in the form of a solution in which the deactivator is dissolved in a solvent such as water to deactivate the catalyst and then separating and drying the polyphenylene ether-organoclay composite.

Hereinafter, the post-treatment methods after completion of the polymerization reaction will be described in more detail, but there is no limitation on the methods.

Since a good solvent for a polyphenyl ether is used in the solution polymerization method, on completion of polymerization after the polymerization reaction is carried out until a desired molecular weight is obtained, a polymerization mixture is obtained in which the polyphenylene ether is dissolved in the solvent and the organoclay is dispersed. Therefore, a polyphenylene ether-organoclay composite may be collected, for example, by contacting the polymerization mixture with an aqueous solution of the catalyst deactivator (when the separation of an aqueous-phase is observed, the aqueous-phase may be removed) and further adding a solvent such as methanol which does not dissolve a polyphenylene ether to precipitate the polyphenylene ether-organoclay composite and then performing operations such as filtration, washing and drying.

On the other hand, in the slurry polymerization method which is a suitable technique, since a good solvent and a poor solvent for a polyphenylene ether are used and the polyphenylene ether is beginning to precipitate in the course of polymerization, on completion of polymerization after the polymerization reaction is carried out until a desired molecular weight is obtained, a polymerization mixture is obtained in which a polyphenylene ether-organoclay composite is already dispersed and precipitated. Therefore, the polyphenylene ether-organoclay composite may be collected, for example, by contacting the polymerization mixture with an aqueous solution of the catalyst deactivator (when the separation of an aqueous-phase is observed, the aqueous-phase may be removed) and further performing operations such as filtration, washing and drying.

As described above in detail, in the production process of the polyphenylene ether-organoclay composite, the production process itself is a novel one and the polyphenylene ether-organoclay composite thus obtained is also a novel one. This fact is made clear by comparing the properties of a composite obtained by the so-called melt intercalation method with those of the polyphenylene ether-organoclay composite.

The polyphenylene ether-organoclay composite preferably satisfies the following formula (I) when an X-ray diffraction measurement is performed by radiating an X-ray from the cross-sectional surface (the thickness direction) of a pressed flat plate having a thickness of approximately 0.5 to 5 mm obtained by press molding (refer to Figure 1), a normal line direction of the pressed flat plate of the resulting X-ray two-dimensional scattering pattern (refer to Figure 2) is assumed to be 0°, a maximum value of a peak derived from the organoclay in the one-dimensional profile (refer to Figure 3) calculated by sector averaging in a range of - 15° to 15° is present in a range of 2θ = 3° to 7°, and a total of the peak area derived from the organoclay and a peak area derived from the polyphenylene ether is assumed to be 100%, if it is assumed that a ratio of the peak area derived from the organoclay is defined as a (%), a ratio of the peak area derived from the polyphenylene ether is defined as b (%) and a ratio of the organoclay is defined as α and a total composite mass of the polyphenylene ether and the organoclay is defined as 1.

$$(a/\alpha)/[b/(1-\alpha)] \leq 5 \ ... \ (I)$$

The progression degree of the clay interlayer peeling in the polyphenylene ether-organoclay may be determined by the X-ray diffraction measurement. Hereinafter, the X-ray diffraction measurement will be described in detail.

Firstly, apart from a press molded flat plate (test specimen) of the polyphenylene ether-organoclay composite, a press molded product (reference specimen) composed of only a polyphenylene ether is prepared and the one-dimensional profile figure is analyzed in the same way. The profile figure is compared with the one-dimensional profile figure of the polyphenylene ether-organoclay composite, thereby easily enabling to distinguish between the peak derived from the organoclay and the peak derived from the polyphenylene ether. From the viewpoint of the sufficient improvement of the physical properties, for the polyphenylene ether-organoclay composite, the maximum value of the peak derived from the organoclay is present in the range of preferably 2θ = 3° to 7°, more preferably 5° to 7° and further more preferably 6° to 7°.

In addition, from the above one-dimensional profile figure, it is possible to calculate the ratio of the peak area derived from the organoclay to the peak area derived from the polymer (hereinafter also referred to as the clay/polymer area ratio). From the viewpoint of the sufficient improvement of the physical properties, it is preferable that the clay/polymer area ratio is smaller than that of the polymer-clay composite prepared by adding the same amount of clay to a polymer component to extrude by an extruder, a so-called melt intercalation method. Specifically, the clay/polymer area ratio is

a value of preferably from 2 to 80%, more preferably from 2 to 60% and further more preferably from 5 to 50%, based on the polymer-organoclay composite prepared by a melt intercalation method.
And, the progression degree of the clay interlayer peeling in the polyphenylene ether-organoclay composite may be determined by calculating the formula (I) from a(%), b(%) and $\alpha$ which are calculated as above. The smaller the value determined by the above formula (I), the larger the progression degree of the clay interlayer peeling. Therefore, the value of the above formula (I) is preferably 5.0 or less and more preferably from 0.5 to 3.0. From the viewpoint of sufficient flame retardancy and improvement of light resistance, the value determined by the above formula (I) is preferably 3 or less, and from the viewpoint of improvement of toughness, the value is more preferably 0.5 or more.
In addition, the mass ratio $\alpha$ of the organoclay in the polyphenylene ether-organoclay composite may be determined by measuring ash content. Here, in addition to the above ash content (clay) measurement, the content of the polyphenylene ether is determined by separating only the polyphenylene ether from the blended resin by performing separation operations such as dissolution, precipitation and the like in the solvent. The content of the polyphenylene ether-organoclay composite in the product blended with other thermoplastic resins is the sum of the clay and the polyphenylene ether determined, and the blending ratio between the clay and the polyphenylene ether may be determined.

The polyphenylene ether contained in the polyphenylene ether-organoclay composite has a reduced viscosity ($\eta$ sp/c) of preferably from 0.2 to 0.9 dl/g, more preferably from 0.3 to 0.7 dl/g and further more preferably 0.4 to 0.7 dl/g. From the viewpoint of development of the sufficient mechanical properties, the polyphenylene ether preferably has a reduced viscosity ($\eta$ sp/c) of 0.2 dl/g or more, and from the viewpoint of molding processability, the polyphenylene ether preferably has a reduced viscosity ($\eta$ sp/c) of 0.9 dl/g or less. In addition, the reduction viscosity ($\eta$ sp/c) may be determined by measuring in a chloroform at 30°C using an Ubbelohde viscometer theoretically under the condition that the polymer concentration is 0.5 g/dl.

From the viewpoint of melt processability and development of the sufficient mechanical properties of a molded product, the polyphenylene ether contained in the polyphenylene ether-organoclay composite has a number average molecular weight of preferably from 10000 to 40000 and more preferably from 13000 to 30000. If the polyphenylene ether has a number average molecular weight of less than 10000, sufficient mechanical properties may not be obtained, and if the polyphenylene ether has a number average molecular weight of more than 40000, a desired molded product may not be obtained because melt processability is deteriorated.

The polyphenylene ether-organoclay composite may be melt-kneaded with a conventionally well-known thermoplastic resin and a thermosetting resin. The specific example of the thermoplastic resin and the thermosetting resin includes, for example, but is not particularly limited to, polyethylene, polypropylene, polystyrene, acrylonitrile-styrene resin, acrylonitrile-butadiene-styrene resin, methacrylate resin, vinyl chloride, polyamide, polyacetal, high molecular weight polyethylene, polybutylene terephthalate, polymethylpentene, polycarbonate, polyphenylene sulfide, polyether ether ketone, liquid crystal polymer, polytetrafluoroethylene, polyetherimide, polyallylate, polysulfone, polyether sulfone, polyamide-imide, phenol, urea, melamine, unsaturated polyester, alkyd, epoxy and diallyphthalate. These may be used alone or in combination with two or more kinds. In addition, for the purpose of adjusting stiffness, conductivity, flame retardancy, impact resistance and the like, there may be added a conventionally well-known inorganic filler, various additives, a thermoplastic elastomer, and the like.

<Polymer-(Organo)clay Composite>

The above production process may be also applied in the production of other polymer-(organo)clay composites. That is, a high-performance polymer-(organo)clay composite may be obtained, which is improved in flame retardancy, and durability such as light resistance, chemical resistance and impact resistance, compared to a composite material obtained by a conventional melt intercalation method, by optimizing the amount added of a monomer component used for the polymerization and an (organo)clay added in the polymerization system, in the technique of the composite process by adding the (organo)clay during the polymerization of a polymer. Specifically, a polymer-(organo)clay may be produced by preparing a mixture containing a monomer having an aromatic ring in the monomer unit and an (organo)clay in which the (organo)clay is contained in an amount of 0.1 to 20 parts by mass based on 100 parts by mass of the phenolic compound, and then polymerizing the monomer in the mixture to produce a thermoplastic resin having a glass transition temperature (Tg) of 150°C or higher and having an aromatic ring in the constitutional unit. In addition, as mentioned above, the (organo)clay added here is not limited to an organoclay and may be a clay.

The thermoplastic resin, which has a glass transition temperature (Tg) of 150°C or higher and contains an aromatic ring (aromatic group) in the constitutional unit, is not particularly limited if it is either a non-crystalline polymer or a crystalline polymer, but preferably is a non-crystalline polymer such as a polyphenylene ether, an aromatic polycarbonate, a polyetherimide and a polyarylate, and especially preferably is a polyphenyl ether. Hereinafter, the embodiment of each resin will be described in detail, but the description overlapping with the embodiment of the polyphenylene ether described above and each overlapped description are omitted.

<Aromatic Polycarbonate-(Organo)clay Composite>

The polymerization (polycondensation) of the aromatic polycarbonate includes an interface method in which an aromatic dihydroxy compound (phenolic compound) such as bisphenol is directly reacted with phosgene and a melting method in which an aromatic dihydroxy compound and an aromatic diester carbonate such as diphenylcarbonate are subjected to ester exchange reaction. In the composite process with the (organo)clay, preferred is the composite process with a melt polymerization method in which a (organo)clay and a mixture are prepared by an aromatic dihydroxy compound which is a monomer component and an aromatic diester carbonate and followed by melting in the presence of a catalyst such as an ester exchange catalyst.

The specific example of the aromatic dihydroxy compound includes, for example, bis(hydroxyaryl)alkanes such as 2,2-bis(4-hydroxyphenyl)propane, 2,2-bis(4-hydroxyphenyl)butane, 2,2-bis(4-hydroxyphenyl)octane, bis(4-hydroxyphenyl)phenylmethane, 2,2-bis(4-hydroxy-3-methylphenyl)propane and 1,1-bis(4-hydroxy-t-butylphenyl)propane; bis(hydroxyaryl)cycloalkanes such as 1,1-bis(4-hydroxyphenyl)cyclopentane and 1,1-bis(hydroxyphenyl)cyclohexane; dihydroxyaryl ethers such as 4,4'-dihydroxydiphenyl ether; dihydroxyarylsulfides such as 4,4'-dihydroxydiphenylsulfide; and dihydroxyarylsulfones such as 4,4'-dihydroxydiphenylsulfone. These may be used alone or in combination with two or more kinds. Among these, especially preferred is 2,2-bis(4-hydroxyphenyl)propane.

The aromatic diester carbonate includes an ester of an aryl group having 6 to 10 carbon atoms which may be substituted or an aralkyl group or the like, and specifically includes, for example, diphenylcarbonate, ditolylcarbonate, bis(chlorophenyl)carbonate, m-cresylcarbonate, dinaphthylcarbonate and bis(diphenyl)carbonate. These may be used alone or in combination with two or more kinds.

When the aromatic dihydroxy compound and the aromatic dihydroxy compound are used, the aromatic diester carbonate is used at a ratio of preferably 1.00 to 1.30 moles and more preferably 1.005 to 1.150 moles based on one mole of the aromatic dihydroxy compound.

In the polymerization of the aromatic polycarbonate, as a catalyst for accelerating the polymerization rate, preferred used are an alkali metal compound and/or an alkali earth metal compound and a nitrogen-containing basic compound. These may be used alone or in combination with two or more kinds, and for example, it is possible to use an ester exchange catalyst and the like composed of a nitrogen-containing basic compound and an alkali metal compound and/or an alkali earth metal compound.

The specific example of the alkali metal compound includes, for example, sodium hydroxide, potassium hydroxide, lithium hydroxide, sodium hydrogen carbonate, potassium hydrogen carbonate, lithium hydrogen carbonate, sodium carbonate, potassium carbonate, lithium carbonate, sodium acetate, potassium acetate, lithium acetate, sodium stearate, potassium stearate, lithium stearate, sodium, potassium and lithium salts of bisphenol A, sodium benzoate and lithium benzoate. These may be used alone or in combination with two or more kinds.

The specific example of the alkali earth metal compound includes, for example, calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate and strontium stearate. These may be used alone or in combination with two or more kinds.

The specific example of the nitrogen-containing basic compound includes, for example, tetramethylammonium hydroxide, tetraethylammonium hydroxide, tetrabutylammonium hydroxide, trimethylbenzylammonium hydroxide, trimethylamine, triethylamine, dimethylbenzylamine and triphenylamine. These may be used alone or in combination with two or more kinds.

The amount used of the alkali metal compound and/or the alkali earth metal compound is preferably $1 \times 10^{-7}$ to $1 \times 10^{-4}$ equivalent and more preferably $1 \times 10^{-5}$ to $5 \times 10^{-5}$ equivalent based on one mole of the aromatic dihydroxy compound. In addition, the amount used of the nitrogen-containing basic compound is preferably $1 \times 10^{-5}$ to $1 \times 10^{-3}$ equivalent and more preferably $1 \times 10^{-5}$ to $5 \times 10^{-4}$ equivalent based on one mole of the aromatic dihydroxy compound.

In addition, other compounds may be used as an auxiliary catalyst where necessary. The auxiliary catalyst includes, but is not particularly limited to, for example, an alkali metal salt or alkali earth metal salt such as boron or aluminum hydroxide, quaternary ammonium salts, alkoxides of an alkali metal or alkali earth metal, organic acid salts of an alkali metal or alkali earth metal, zinc compounds, boron compounds, silica compounds, germanium compounds, osmium compounds and zirconium compounds.

The polymerization (polycondensation and melt polycondensation) of the aromatic polycarbonate may be carried out according to a conventional well-known method and is not particularly limited. For example, the polymerization may be carried out by distilling off the resulting aromatic monohydroxy compound in the presence of an inert gas under stirring while heating so that the reaction temperature is in the range of 120 to 350°C. In addition, it is preferable that the distillation of the generating aromatic monohydroxy compound is facilitated to complete the polymerization by increasing the pressure-reduction degree of the system to 10 to 0.1 Torr in the later stage of the reaction.

The aromatic polycarbonate in the aromatic polycarbonate-(organo)clay composite obtained by the above process has an intrinsic viscosity [η] of preferably 0.20 to 0.50 dl/g and more preferably 0.25 to 0.40 dl/g, as measured in methylene chloride at 30°C at a polymer concentration of 0.7 g/dl.

<Polyetherimide-(Organo)Clay Composite>

The polymerization of the polyetherimide may be carried out according to a conventional well-known method and is not particularly limited. For example, the polymerization of the polyetherimide may be carried out by preliminarily dispersing an aromatic bis(ether anhydride), an organic diamine compound and an (organo)clay in a well-known solvent such as o-dichlorobenzene, m-cresol and toluene and followed by subjecting the mixture to reaction at a temperature of 100 to 250°C. In addition, the polymerization of the polyetherimide may be also carried out by preliminarily mixing an (organo)clay into an aromatic bis(ether anhydride) and an organic diamine compound and followed by subjecting the mixture to melt polymerization at a high temperature of around 200 to 400°C under stirring. During the polymerization, there may be added various additives such as a chain terminator and a branching agent.

The specific example of the aromatic bis(ether anhydride) includes, for example, 2,2-bis(4-(3,4-dicarboxyphenoxy)phenyl)propane dianhydride, 4,4'-bis(3,4-dicarboxyphenoxy)diphenyl ether dianhydride, 4,4'-bis(3,4-dicarboxyphenoxy)diphenyl sulfide dianhydride, 4,4'-bis(3,4-dicarboxyphenoxy)benzophenone dianhydride, 4,4'-bis(3,4-dicarboxyphenoxy)diphenyl sulfone dianhydride, 2,2-bis[4-(2,3-dicarboxyphenoxy)phenyl]propane dianhydride, 4,4'-bis(2,3-dicarboxyphenoxy)diphenyl ether dianhydride, 4,4'-bis(2,3-dicarboxyphenoxy)diphenyl sulfide dianhydride, 4,4'-bis(2,3-dicarboxyphenoxy)benzophenone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl-2,2-propane dianhydride, 4-(2,3-dicarboxyphenoxy)-4'-(3,4-dicarboxyphenoxy)diphenyl ether dianhydride, 4-(2,3-dicarboxyphenoxy)-4'-(3,4-dicarboxyphenoxy)diphenyl sulfide dianhydride, 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride. These may be used alone or in combination with two or more kinds.

The specific example of the organic diamine compound includes, for example, m-phenylenediamine, p-phenylenediamine, 4,4'-diaminodiphenylpropane, 4,4'-diaminodiphenylmethane, 4,4'-diaminodiphenylsulfide, 4,4'-diaminodiphenylsulfone, 4,4'-diaminodiphenyl ether, 1,5-diaminonaphthalene, 3,3-dimethylbenzidine, 3,3-dimethoxybenzidine, 2,4-bis(β-amino-t-butyl)toluene, bis(p-β-amino-t-butylphenyl)ether, bis(p-β-methyl-o-aminophenyl)benzene, 1,3-diamino-4-isopropylbenzene, 1,2-bis(3-aminopropoxy)ethane, benzidine, m-xylylenediamine, 2,4-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-dimethylpropylenediamine, 1,18-octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,18-octadecanediamine, bis(3-aminopropyl)sulfide, N-methyl-bis(3-aminopropyl)amine, hexamethylenediamine, heptamethylenediamine, nonamethylenediamine and decamethylenediamine. These may be used alone or in combination with two or more kinds.

The polyetherimide in the polyetherimide-(organo)clay composite obtained by the above process has an intrinsic viscosity [η] of preferably 0.2 to 0.80 dl/g and more preferably 0.35 to 0.70 dl/g, as measured in m-cresol at 25°C at a polymer concentration of 0.5 g/dl.

<Polyarylate-(Organo)clay Composite>

The polymerization of the polyarylate may be carried out according to a conventional well-known method and is not particularly limited. For example, the polymerization of the polyarylate may be carried out by using bisphenols and aromatic dicarboxylic acid as a monomer and subjecting the mixture to melt polymerization or interface polymerization. In the melt polymerization method, for example, polymerization may be carried out by preparing a mixture by preliminarily mixing bisphenols, aromatic dicarboxylic acids and an (organo)clay which are acetylated in advance and polymerizing the mixture under high temperature and reduced pressure in the presence of a catalyst such as a Lewis acid where necessary. In the interface polymerization method, for example, polymerization may be carried out by mixing and stirring bisphenols dissolved in an alkali solution (an aqueous-phase) and a mixture of an aromatic dicarboxylic acid halide and an (organo)clay dissolved in an organic solvent incompatible with water (an organic phase). In the composite process with the (organo)clay, more preferred is the interface polymerization from the viewpoint of producing a polyarylate-(organo)clay composite having a sufficiently high molecular weight.

The specific example of the bisphenols includes, for example, 4,4'-dihydroxybiphenyl, 2-methyl-4,4'-dihydroxybiphenyl, 3-methyl-4,4'-dihydroxybiphenyl, 3-methyl-4,4'-dihydroxybiphenyl, 2-chloro-4,4'-dihydroxybiphenyl, 3-chloro-4,4'-dihydroxybiphenyl, 3,3'-dimethyl-4,4'-dihydroxybiphenyl, 2,2'-dimethyl-4,4'-dihydroxybiphenyl, 2,3'-dimethyl-4,4'-dihydroxybiphenyl, 3,3'-dichloro-4,4'-dihydroxybiphenyl, 3,3'-di-tert-butyl-4,4'-dihydroxybiphenyl, 3,3'-dimethoxy-4,4'-dihydroxybiphenyl, 3,3',5,5'-tetramethyl-4,4'-dihydroxybiphenyl, 3,3',5,5'-tetra-tert-butyl-4,4'-dihydroxybiphenyl, 3,3',5,5'-tetrachloro-4,4'-dihydroxybiphenyl, 2,2'-dihydroxy-3,3'-dimethylbiphenyl, 3,3'-difluoro-4,4'-biphenol, 2,2'-dihydroxy-3,3',5,5'-tetramethylbiphenyl, 3,3',5,5'-tetrafluoro-4,4'-biphenol, 2,2',3,3',5,5'-hexamethyl-4,4'-biphenol, bis(4-hydroxyphenyl)methane, 1,1 1-bis(4-hydroxyphenyl)ethane, bis(4-methyl-2-hydroxyphenyl)methane, bis(3,5-dimethyl-4-hydroxyphenyl)methane, 2,2-bis(4-hydroxyphenyl)-4-methylpentane, 2,2-bis(4-hydroxyphenyl)propane, 1,1-bis(4-hydroxyphenyl)cyclohexane, 2,2-bis(3-methyl-4-hydroxyphenyl)propane, 2,2-bis(3,5-dimethyl-4-hydroxyphenyl)propane, 1,1-bis(4-hydroxyphenyl)-1-phenylethane, 1,1-bis(4-hydroxyphenyl)-2-ethylhexane, 2,2-bis(3-phenyl-4-hydroxyphenyl)propane, bis(3-methyl-4-hydroxyphenyl)methane, 2,2-bis(4-hydroxyphenyl)butane, 1, 1-bis(4-hydroxyphenyl)-2-methylpropane, bis(4-hydroxyphenyl)phenylmethane, 2,2-bis(4-hydroxyphenyl)octane, 1,1-bis(3-methyl-4-hydroxyphenyl)cyclohexane, 2,2-bis(3-allyl-4-hydroxyphenyl)propane, 2,2-bis(3-isopropyl-4-hydroxyphenyl)propane, 2,2-bis(3-tert-butyl-4-hydroxyphenyl)propane, 2,2-bis(3-sec-butyl-4-hydroxyphenyl)propane, 1,1-bis(2-methyl-4-hydroxy-5-tert-butylphenyl)-2-methylpropane, 4,4'-[1,4-phenylene-bis(1-methylethylidene)]bis(3-methyl-4-hydroxyphenyl), 1,1-bis(3-phenyl-4-hydroxyphenyl)cyclohexane, bis(2-hydroxyphenyl)methane, 2,4'-methylenebisphenol, bis(3-methyl-4-hydroxyphenyl) methane, 1,1-bis(4-hydroxyphenyl)propane, 1,1-bis(2-hydroxy-5-methylphenyl)ethane, 1,1 -bis(4-hydroxyphenyl)-3-methyl-butane, bis(2-hydroxy-3,5-dimethylphenyl)methane, 1,1-bis(4-hydroxyphenyl)cyclopentane, 1,1-bis(3-methyl-4-hydroxyphenyl)cyclopentane, 3,3-bis(4-hydroxyphenyl)pentane, 3,3-bis(3-methyl-4-hydroxyphenyl)pentane, 3,3-bis (3,5-dimethyl-4-hydroxyphenyl)pentane, 2,2-bis(2-hydroxy-3,5-dimethylphenyl)propane, 2,2-bis(4-hydroxyphenyl)nonane, 1,1-bis(3-methyl-4-hydroxyphenyl)-1-phenylethane, 1,1-bis(3,5-dimethyl-4-hydroxyphenyl)cyclohexane, 2,2-bis(4-hydroxyphenyl)decane, 1,1-bis(4-hydroxyphenyl)decane, 1,1-bis(2-hydroxy-3-tert-butyl-5-methylphenyl)methane, bis (4-hydroxyphenyl)diphenylmethane, terpenediphenyl, 1,1-bis(3-tert-butyl-4-hydroxyphenyl)cyclohexane, l,l-bis(2-methyl-4-hydroxy-5-tert-butylphenyl)-2-methylpropane, 2,2-bis(3-cyclohexyl-4-hydroxyphenyl)propane, bis(3,5-di-tert-butyl-4-hydroxyphenyl)methane, bis(3,5-di-sec-butyl-4-hydroxyphenyl)methane, 1,1-bis(3-cyclohexyl-4-hydroxyphenyl)cyclohexane, 1,1-bis(2-hydroxy-3,5-di-tert-butylphenyl)ethane, 1,1-bis(3-nonyl-4-hydroxyphenyl)methane, 2,2-bis (3,5-di-tert-butyl-4-hydroxyphenyl)propane, 1,1-bis(2-hydroxy-3,5-di-tert-butyl-6-methylphenyl)methane, 1, 1-bis(3-phenyl-4-hydroxyphenyl)-1-phenylethane, $\alpha,\alpha'$-bis(4-hydroxyphenyl)butyl acetate, 1,1-bis(3-fluoro-4-hydroxyphenyl) methane, bis(2-hydroxy-5-fluorophenyl)methane, 2,2-bis(3-fluoro-4-hydroxyphenyl)propane, 1,1-bis(3-fluoro-4-hydroxyphenyl)-1-phenylmethane, 1,1-bis(3-fluoro-4-hydroxyphenyl)-1-(p-fluorophenyl)methane, 1,1-bis(4-hydroxyphenyl)-1-(p-fluorophenyl)methane, 2,2-bis(3-chloro-4-hydroxy-5-methylphenyl)propane, 2,2-bis(3,5-dichloro-4-hydroxyphneyl) propane, 2,2-bis(3-chloro-4-hydroxyphenyl)propane, 1,1-bis(3,5-dibromo-4-hydroxyphenyl)methane, 2,2-bis(3,5-dibromo-4-hydroxyphenyl)propane, 2,2-bis(3-nitro-4-hydroxyphenyl)propane, bis(4-hydroxyphenyl)dimethylsilane, bis(2,3,5-trimethyl-4-hydroxyphenyl)-1-phenylmethane, 2,2-bis(4-hydroxyphenyl)dodecane, 2,2-bis(3-methyl-4-hydroxyphenyl) dodecane, 2,2-bis(3,5-dimethyl-4-hydroxyphenyl)dodecane, 1,1-bis(3-tert-butyl-4-hydroxyphenyl)-1-phenylethane, 1,1-bis(3,5-di-tert-butyl-4-hydroxyphenyl)-1-phenylethane, 1,1-bis(2-methyl-4-hydroxy-5-cyclohexylphenyl)-2-methylpropane, 1,1-bis(2-hydroxy-3,5-di-tert-butylphenyl)ethane, 2,2-bis(4-hydroxyphenyl)propanic acid methyl ester, 2,2-bis(4-hydroxyphenyl)propanic acid ethyl ester, 2,2',3,3',5,5'-hexamethyl-4,4'-biphenol, bis(2-hydroxyphenyl)methane, 2,4'-methylenebisphenol, 1,2-bis(4-hydroxyphenyl)ethane, 2-(4-hydroxyphenyl)-2-(2-hydroxyphenyl)propane, bis(2-hydroxy-3-allylphenyl)methane, 1,1-bis(2-hydroxy-3,5-dimethylphenyl)-2-methylpropane, 1,1-bis(2-hydroxy-5-tert-butylphenyl)ethane, bis(2-hydroxy-5-phenylphenyl)methane, 1,1-bis(2-methyl-4-hydroxy-5-tert-butylphenyl)butane, bis(2-methyl-4-hydroxy-5-cyclohexylphenyl)methane, 2,2-bis(4-hydroxyphenyl)pentadecane, 2,2-bis(3-methyl-4-hydroxyphenyl)pentadecane, 2,2-bis(3,5-dimethyl-4-hydroxyphenyl)pentadecane, 1,2-bis(3,5-di-tert-butyl-4-hydroxyphenyl) ethane, bis(2-hydroxy-3,5-di-tert-butylphenyl)methane, 2,2-bis(3-styryl-4-hydroxyphenyl)propane, 1,1-bis(4-hydroxyphenyl)-1-(p-nitrophenyl)ethane, bis(3,5-difluoro-4-hydroxyphenyl)methane, bis(3,5-difluoro-4-hydroxyphenyl)-1-phenylmethane, bis(3,5-difluoro-4-hydroxyphenyl)diphenylmethane, bis(3-fluoro-4-hydroxyphenyl)diphenylmethane, 2,2-bis(3-chloro-4-hydroxyphenyl)propane, 1,1-bis(4-hydroxyphenyl)-3,3-dimethyl-5-methyl-cyclophexane, 1,1-bis(4-hydroxyphenyl)-3,3-dimethyl-5,5-dimethylcyclohexane, 1,1-bis(4-hydroxyphenyl)-3,3-dimethyl-4-methyl-cyclohexane, 1,1-bis(4-hydroxyphenyl)-3,3-dimethyl-5-ethyl-cyclohexane, 1,1-bis(4-hydroxyphenyl)-3,3-dimethyl-5-methyl-cyclopentane, 1,1-bis(3,5-dimethyl-4-hydroxyphenyl)-3,3-dimethyl-5-methyl-cyclohexane, 1,1-bis(3,5-diphenyl-4-hydroxyphenyl)-3,3-dimethyl-5-methyl-cyclohexane, 1,1-bis(3-methyl-4-hydroxyphenyl)-3,3-dimethyl-5-methyl-cyclohexane, 1,1-bis(3-phenyl-4-hydroxyphenyl)-3,3-dimethyl-5-methylcyclohexane, 1,1-bis(3,5-dichloro-4-hydroxyphenyl)-3,3-dimethyl-5-methylcyclohexane, 1,1-bis(3,5-dibromo-4-hydroxyphenyl)-3,3-dimethyl-5-methylcyclohexane, 1,4-di(4-hydroxyphenyl)-p-menthane, 1,4-di(3-methyl-4-hydroxyphenyl)-p-menthane and 1,4-di(3,5-dimethyl-4-hydroxyphenyl)-p-menthane. These may be used alone or in combination with two or more kinds.

Specific example of the aromatic dicarboxylic acid includes, for example, terephthalic acid, isophthalic acid, orthophthalic acid, diphenic acid, 1,4-naphthalene dicarboxylic acid, 2,3-naphthalene dicarboxylic acid, 2,6-naphthalene dicarboxylic acid, 2,7-naphthalene dicarboxylic acid, 1,8-naphthalene dicarboxylic acid, 1,5-naphthalene dicarboxylic acid and an aromatic dicarboxylic acid in which the aromatic nucleus is substituted by an alkyl group or a halogen group. These may be used alone or in combination with two or more kinds.

The specific example of the aromatic dicarboxylic acid halide includes, for example, terephthalic acid halide, isophthalic acid halide, orthophthalic acid halide, diphenic acid halide, 1,4-naphthalene dicarboxylic acid halide, 2,3-naphthalene dicarboxylic acid halide, 2,6-naphthalene dicarboxylic acid halide, 2,7-naphthalene dicarboxylic acid halide, 1,8-naphthalene dicarboxylic acid halide, 1,5-naphthalene dicarboxylic acid halide and an aromatic dicarboxylic acid halide in which the aromatic nucleus is substituted by an alkyl group or a halogen group. These may be used alone or in combination with two or more kinds. Among these, preferred is a mixture of 10 to 90% by mole of terephthalic acid halide and 90 to 10% by mole of isophthalic acid, and especially preferred is a mixture of equal parts of both.

In the interface polymerization, in order to adjust the molecular weight by end-capping the polymer, it is preferable to use an end-capping agent such as an aromatic hydroxy compound, an aromatic carboxylic acid halide, an aromatic haloformate and the like. The specific example of the end-capping agent includes an aromatic hydroxy compound such as phenol, o-, m- and p-cresol, o-, m- and p-ethylphenol, o-, m- and p-propylphenol, o-, m-, and p-tert-butylphenol, pentylphenol, hexylphenol, octylphenol, nonylphenol and o-, m-, and p-chlorophenol; an aromatic carboxylic acid halide such as benzoic acid halide, o-, m- and p-methylbenzoic acid halide, o-, m- and p-tert-butylbenzoic acid halide and o-, m- and p-chlorobenzoic acid halide; an aromatic haloformate such as phenylhaloformate, o-, m- and p-methylphenylhaloformate, o-, m-, and p-tert-butylphenylhaloformate and o-, m-, and p-chlorophenylhaloformate; and the like. These may be used alone or in combination with two or more kinds.

There will be explained a preferred example for preparing a polyarylate-(organo)clay composite by the interface polymerization in more detail.

Firstly, an alkali aqueous solution of bisphenols is prepared as an aqueous-phase and to the alkali aqueous solution is added a polymerization catalyst and an end-capping agent. As the alkali component which can be used here, there may be mentioned sodium hydroxide, potassium hydroxide and the like. On the other hand, as the polymerization catalyst, it is essential to use a quaternary ammonium salt or a quaternary phosphonium salt having 3 to 4 n-propyl groups.

The specific example of the quaternary ammonium salt includes, for example, tri-n-propyl-benzyl-ammonium chloride, tri-n-propyl-benzyl-ammonium bromide, tri-n-propyl-benzyl-ammonium hydroxide, tri-n-propyl-benzyl-ammonium hydrogen sulfate, tetra-n-propylammonium chloride, tetra-n-propylammonium bromide, tetra-n-propylammonium hydroxide and tetra-n-propylammonium hydrogen sulfate. These may be used alone or in combination with two or more kinds.

The specific example of the quaternary phosphonium salt include, for example, tri-n-propyl-benzyl-phosphonium chloride, tri-n-propyl-benzyl-phosphonium bromide, tri-n-propyl-benzyl-phosphonium hydroxide, tri-n-propyl-benzyl-phosphonium hydrogen sulfate, tetra-n-propylphosphonium chloride, tetra-n-propylphosphonium bromide, tetra-n-propylphosphonium hydroxide and tetra-n-propylphosphonium hydrogen sulfate. These may be used alone or in combination with two or more kinds.

The amount added of the above catalyst is preferably 0.1 to 2.0% by mole and more preferably 0.3 to 1.0% by mole based on the number of moles of the bisphenols used for polymerization. If the amount added of the polymerization catalyst is less than 0.1% by mole, no effect of the polymerization is obtained and the molecular weight of the polyarylate resin does not sufficiently tend to increase, and if the amount added of the polymerization catalyst exceeds 2.0% by mole, the hydrolysis reaction of the aromatic dicarboxylic acid is accelerated and the molecular weight of the polyarylate resin does not also sufficiently tend to increase.

Subsequently, there is prepared a mixture (an organic phase) of an aromatic dicarboxylic acid halide and an (organo)clay which is dissolved in an organic solvent incompatible with water. As the solvent used for the organic phase, there is used a solvent which is incompatible with water and can dissolve a polyarylate resin. The specific example of the solvent includes, for example, methylene chloride, 1,2-dichloromethane, chloroform, carbon tetrachloride, chlorobenzene, 1,1,2,2-tetrachloroethane, 1,1,1-trichloroethane, o-, m- and p-dichlorobenzene, toluene, benzene, xylene and tetrahydrofuran. These may be used alone or in combination with two or more kinds. In preparing the mixture (organic phase), it is important to fully dissolve the aromatic dicarboxylic acid halide and the (organo)clay in the solvent before mixing with water.

Then, a polyarylate-(organo)clay composite is prepared by adding the mixture (mixed solution) which is the organic phase to the aqueous-phase solution while stirring and mixing, and followed by subjecting to interface polymerization under stirring preferably at a temperature of 25°C or lower for 1 to 5 hours.

The polyarylate in the polyarylate-(organo)clay composite obtained by the above process has an inherent viscosity [η] of preferably 0.85 to 2.50 dl/g and more preferably 0.95 to 1.80 dl/g, as measured in 1,1,2,2-tetrachloroethane at 25°C at a polymer concentration of 1 g/dl. From the viewpoint of imparting sufficient mechanical properties, the polyarylate preferably has an inherent viscosity [η] of 0.85 dl/g or more, and from the viewpoint of molding processability, the polyarylate preferably has an inherent viscosity [η] of 2.50 dl/g, or less.

## Examples

Hereinafter, the present invention will be described in more detail with reference to Examples and Comparative Examples, but the present invention is not limited to these Examples, and various modifications can be made within the range of the gist of the present invention. In addition, hereinafter, "parts" and "%" means "parts by mass" and "% by

mass", respectively.

The measurement of various physical properties in Examples and Comparative Examples was determined by the following methods.

(1) Measurement of Reduction Viscosity (η sp/c)

A chloroform solution of a polymer was prepared at a concentration of 0.5 g/dl. The measurement was made for the chloroform solution at 30°C by using an Ubbelohde viscometer. The unit is represented by dl/g. In measuring the reduction viscosity of the polyphenylene ether in the polyphenylene ether-organoclay composite, in consideration of the amount added of the organoclay, the measurement was made by adjusting so that the concentration of the polyphenylene ether in chloroform is theoretically 0.5 g/dl. Here, a solution was prepared by dissolving, the polyphenylene ether-organoclay composite in chloroform so that the polymer concentration is theoretically 0.5 g/dl. A solution, which was obtained by adding the theoretical amount of the organoclay present in the solution into chloroform, was used as a blank for the measurement.

(2) Measurement of Intrinsic Viscosity ([η])

A methylene chloride solution of a polymer was prepared at a concentration of 0.7 g/dl. The measurement was made for the methylene chloride solution at 30°C by using an Ubbelohde viscometer. The unit is represented by dl/g. In measuring the intrinsic viscosity of the polycarbonate in the polycarbonate-organoclay composite, in consideration of the amount added of the organoclay, the measurement was made by adjusting so that the concentration of the polycarbonate in methylene chloride is theoretically 0.7 g/dl. Here, a solution was prepared by dissolving the polycarbonate-organoclay composite in methylene chloride so that the polymer concentration is theoretically 0.7 g/dl. A solution, which was obtained by adding the theoretical amount of the organoclay present in the solution into chloroform, was used as a blank for the measurement.

(3) Measurement of Ash Content

A resin molded sample was placed in a crucible and was burned in an electric furnace in which the internal temperature was set at approximately 600°C until the weight loss due to the burning of the resin was stopped, and then the mass of the remained ash was measured. The value of the ash amount was represented by the ratio (%) to the mass of the resin molded sample before burning.

(4) Calculation of $(a/\alpha)/[b/(1-\alpha)]$ of formula (1), in X-ray Diffraction Measurement

A pressed flat plate having a size of 6 cm × 6 cm (thickness: 1 mm) was prepared by subjecting the polyphenylene ether-organoclay composite to vacuum press molding. The pressed flat plate was cut off from the normal direction of the sheet surface of the pressed flat plate to the thickness direction and a cut strip having a width of approximately 2 mm was cut out. The cut strip was set in the sample cell and then X-ray diffraction measurement was performed by radiating X-ray from the direction vertical to the cut cross-section surface (thickness direction) (refer to Figures 1 to 3). The conditions of the measurement apparatus are; the incident X-ray wavelength: 0.154 nm, the optical system: pinhole collimation, the detector: an imaging plate, the camera length: 70.6 mm, and the measurement time was 30 minutes. Here, to conduct air scattering (empty cell) correction, measurements of empty cell scattering and X-ray transmissivity for each sample were also performed.

In the resulting X-ray two-dimensional scattering pattern figure, the normal line direction of the pressed flat plate is assumed to be 0°, the one-dimensional profile figure was calculated by sector averaging in the range of -15° to 15°, and the clay/polymer peak area ratio was calculated from the one-dimensional profile figure. Here, the value accumulated in the range of $4.5° < 2\theta < 8.0°$ was used for the peak area derived from a clay, and the value obtained by subtracting the area derived from the clay from the value accumulated in the range of $2.5° < 2\theta < 39°$. From these results, the clay/polymer peak area ratio was calculated. And, when the total of the peak area derived from the resulting clay and the peak area derived from the polyethylene ether is assumed to be 100%, the peak area derived from the clay is defined as a (%), the peak area derived from the polyethylene ether is defined as b (%) and the total mass of the composite determined by the ash content measurement is defined as α, the value of $(a/\alpha)/[b/(1-\alpha)]$ of formula (1) was calculated. It may be judged that the layer peeling of the clay is proceeded as the value is smaller.

(5) Measurement of Flammability

The measurement was made using five strip specimens having a thickness of 3.2 mm prepared by using an

injection molding machine, IS-80C (the molding temperature of 290°C, the die temperature of 80°C), manufactured by Toshiba Machine Co., Ltd., based on UL-94 Test Method. Here, a vertical burn test was conducted using five specimens, and the second flame application was conducted for the specimen that does not drip flaming materials by the first flame application. The measurement results are shown by the dripping number of five specimens and by the average burning second and the maximum burning second obtained by calculating only by the specimen that does not drip flaming materials. In addition, when all of the five specimens drip flaming materials, the average burning second and the maximum burning second were considered to be unmeasurable.

(6) Measurement of Light Resistance

By using a molded flat plate (test specimen) having a dimension of 50 mm × 90 mm × 2.5 mm (thickness) prepared by using an injection molding machine, IS-80C (the molding temperature of 290°C, the die temperature of 80°C), manufactured by Toshiba Machine Co., Ltd., a light stability test was performed using Weather-Ometer Ci4000 manufactured by Toyo Seiki Seisakusho Ltd. Here, the measurement conditions were; the light irradiation condition: xenon lamp irradiation = 340 nm, 0.3 $W/m^2$, the test temperature at 50°C and the irradiation time for 300 hours. After testing, the color difference $\Delta E^*$ between the samples before and after the test was measured using a color meter ZE-2000 manufactured by Nippon Denshoku Co., Ltd. and the measurement results are shown by the color difference $\Delta E^*$. In addition, because the smaller the value of color difference $\Delta E^*$, the smaller the change in color, the light resistance is excellent.

(7) Measurement of Chemical Resistance

There were used six dumbbell specimens having a thickness of 3.2 mm prepared by using an injection molding machine, IS-80C (the molding temperature of 290°C, the die temperature of 80°C), manufactured by Toshiba Machine Co., Ltd. as a sample for measurement, and each sample was fixed on a bending form to apply 1% strain and thereafter was immersed in a mixed solution comprising 40% by mass of cyclohexane and 60% by mass of isopropanol at 23°C for 30 minutes and further was allowed to stand in atmosphere at 23°C for one hour or longer. A tensile test was performed for each sample based on the tensile test method of ASTM D638. Here, an average value of the tensile yield strength (TY), which was measured in advance by performing the tensile test using two specimens which are not immersed in the solvent, was used as a blank. The retention (%) of the tensile yield strength after immersing in the solvent was determined by dividing the average value of the tensile yield strength (TY) of the six specimens immersed in the solvent by the blank.

(8) Measurement of Impact Resistance (Falling-Weight Impact Energy)

By using a flat plate (test specimen) having a dimension of 50 mm × 90 mm × 2.5 mm (thickness) prepared by using an injection molding machine, IS-80C (the molding temperature of 290°C, the die temperature of 80°C), manufactured by Toshiba Machine Co., Ltd., the total absorbed energy at the time of breakage at 23°C was measured by a falling weight graphic impact tester manufactured by Toyo Seiki Seisakusho Ltd.

(9) Sheet Extrudability

A resin composition was dried at 90°C for 3 hours using a dryer and then was extrusion-sheet molded for 90 minutes using a single screw extruder having a screw diameter of 40 mm in which the cylinder temperature is set at 300°C and the T-die (having a width of 40 cm and a lip clearance o 0.8 mm) temperature is set at 305°C under the conditions of a screw rotation number of 40 rpm, a discharging amount of 6 kg/hr and a taking-off speed of 2.0 m/min (the sheet has a size of 38 cm × 10 m and a thickness of approximately 200μm).
In preparing the sheet, the gas generation condition near the resin outlet of the T-die was visually evaluated. In addition, a sheet of 10 m was sampled after 60 minutes from the start of the operation, the generation condition of materials adhered to the sheet and sheet appearance were visually evaluated. For a sheet in which even slightly adhered materials are observed, the generation of materials adhered to the sheet is evaluated as "Yes", and for a sheet in which no materials adhered to the sheet was observed, the generation of materials adhered to the sheet is evaluated as "No". For the evaluation of the sheet appearance, × is defined as a level in which the smoothness and appearance of a sheet are unsuitable for practical use because of the generation of adhered materials and black spots and the like, and O is defined as a level in which the appearance is suitable for practical use because the sheet surface is smooth and no black spots or the like is observed.

[Example 1]

There was used a 10-L jacketed polymerization tank equipped with, at the bottom of the reactor, a sparger for introducing an oxygen-containing gas, a stirring turbine blade and a baffle, and, in a vent gas line at the upper portion of the reactor, a reflux condenser. Firstly, to this polymerization tank were charged 1.186 g of cupric chloride dihydrate, 5.078 g of a 36% hydrochloric acid, 45.293 g of N,N,N',N'-tetramethylpropanediamine, 17.082 g of di-n-butylamine, 1010 g of n-butanol, 2019 g of methanol, 3702 g of a mixed xylene, 1700 g of 2,6-dimethylphenol and 17 g of an organoclay (trade name: BENTON$^R$ 2010, an organized bentonite produced by Elementis Specialties Inc. USA, the organizing agent: benzyl methyl di-hydrogenated tallow ammonium salt, the ignition loss: 40% by mass, the interlayer distance d (001) = 20 Å, and the organic processing amount: 136 meq/100 g) while injecting a nitrogen gas at a flow rate of approximately 500 ml/min, and the mixture was stirred to form a uniform solution and was further successively stirred for two hours by increasing the internal temperature of the reactor to 40°C.
Subsequently, introduction of an oxygen gas was started to the polymerization tank at a flow rate of 1560 Nml/min under vigorous stirring, and polymerization was carried out by controlling so that the internal temperature of the reactor is 40°C while aerating for 260 minutes. In addition, in the polymerization mixture, a polymer was confirmed to precipitate after 130 minutes from the start of feeding the oxygen gas and took a slurry form. Further, the form of a polymerization solution at the time of completion of the polymerization was precipitation polymerization. Thereafter, the aeration with the oxygen gas was stopped and to the polymerization mixture was added 13.0 g of a 50% aqueous solution of ethylenediamine tetraacetic acid trisodium salt (a reagent produced by Dojindo Laboratories), and the polymerization mixture was successively stirred for 60 minutes. Subsequently, hydroquinone (a reagent produced by Wako Pure Chemical Industries, Ltd.) was added in small amounts and stirring was continued until a slurry polyphenylene ether-organoclay composite becomes white color. The internal temperature of the reactor was controlled to be 40°C.
The polymerization mixture thus prepared was filtered, and the resulting filtered residue, a wet polyphenylene ether-organoclay composite was charged, together with 5950 g of methanol, into a 10-L washing tank and stirred for 30 minutes, followed by filtering again to obtain a wet polyphenylene ether-organoclay composite. At that time, the internal temperature of the washing tank was controlled to be 40°C. The operation was repeated three times, followed by drying the resulting wet polyphenylene ether-organoclay composite at 140°C for 240 minutes to obtain a powder of a polyphenylene ether-organoclay composite. The polyphenyl ether in the resulting polyphenylene ether-organoclay composite had a reduced viscosity of 0.42 dl/g.
And, there were blended 51.6 parts by mass of the resulting polyphenylene ether-organoclay composite, 24.2 parts by mass of high-impact polystyrene (trade name: PS6200, produced by NOVA Chemicals Inc., USA) and 24.2 parts by mass of general purpose polystyrene (trade name: Styron 660, produced by Dow Chemical Co., USA), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to prepare a resin mixture composition pellet. As a measurement result, the resin mixture composition pellet had an ash content of 0.307% (0.595% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether organoclay composite. The physical properties test results of the resin molded product (test specimen) are shown in Table 1.

[Example 2]

There was used a 10-L jacketed polymerization tank equipped with, at the bottom of the reactor, a sparger for introducing an oxygen-containing gas, a stirring turbine blade and a baffle, and, in a vent gas line at the upper portion of the reactor, a reflux condenser. Firstly, to this polymerization tank were charged 1.186 g of cupric chloride dihydrate, 20.240 g of tri-n-octylmethylammonium chloride, 45.293 g of N,N,N',N'-tetramethylpropanediamine, 17.082 g of di-n-butylamine, 1010 g of n-butanol, 2019 g of methanol, 3702 g of a mixed xylene, 1700 g of 2,6-dimethylphenol and 17 g of an organoclay (trade name: BENTON$^R$ 2010, an organized bentonite produced by Elementis Specialties Inc. USA, the organizing agent: benzyl methyl di-hydrogenated tallow ammonium salt, the ignition loss: 40% by mass, the interlayer distance d(001) = 20 Å, and the organic processing amount: 136 meq/100 g) while injecting a nitrogen gas at a flow rate of approximately 500 ml/min, and the mixture was stirred to form a uniform solution and was further successively stirred for two hours by increasing the internal temperature of the reactor to 40°C.
Subsequently, introduction of an oxygen gas was started to the polymerization tank at a flow rate of 1560 Nml/min under vigorous stirring, and polymerization was carried out by controlling so that the internal temperature of the reactor is 40°C while aerating for 268 minutes. In addition, in the polymerization mixture, a polymer was confirmed to precipitate after 134 minutes from the start of feeding the oxygen gas and took a slurry form. Further, the form of a polymerization solution

at the time of completion of the polymerization was precipitation polymerization. Thereafter, the aeration with the oxygen gas was stopped and to the polymerization mixture was added 13.0 g of a 50% aqueous solution of ethylenediamine tetraacetic acid trisodium salt (a reagent produced by Dojindo Laboratories), and the polymerization mixture was successively stirred for 60 minutes. Subsequently, hydroquinone (a reagent produced by Wako Pure Chemical Industries, Ltd.) was added in small amounts and stirring was continued until a slurry polyphenylene ether-organoclay composite becomes white color. The internal temperature of the reactor was controlled to be 40°C.

The polymerization mixture thus prepared was filtered, and the resulting filtered residue, a wet polyphenylene ether-organoclay composite was charged, together with 5950 g of methanol, into a 10-L washing tank and stirred for 30 minutes, followed by filtering again to obtain a wet polyphenylene ether-organoclay composite. At that time, the internal temperature of the washing tank was controlled to be 40°C. The operation was repeated three times, followed by drying the resulting wet polyphenylene ether-organoclay composite at 140°C for 240 minutes to obtain a powder of a polyphenylene ether-organoclay composite. The polyphenyl ether in the resulting polyphenylene ether-organoclay composite had a reduced viscosity of 0.42 dl/g.

And, there were blended 51.6 parts by mass of the resulting polyphenylene ether-organoclay composite, 24.2 parts by mass of high-impact polystyrene (trade name: PS6200, produced by NOVA Chemicals Inc., USA) and 24.2 parts by mass of general purpose polystyrene (trade name: Styron 660, produced by Dow Chemical Co., USA), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to prepare a resin mixture composition pellet. As a measurement result, the resin mixture composition pellet had an ash content of 0.309% (0.599% in terms of in the composite).

The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether organoclay composite. The physical properties test results of the resin molded product (test specimen) are shown in Table 1.

[Example 3]

There was used a 10-L jacketed polymerization tank equipped with, at the bottom of the reactor, a sparger for introducing an oxygen-containing gas, a stirring turbine blade and a baffle, and, in a vent gas line at the upper portion of the reactor, a reflux condenser. Firstly, to this polymerization tank were charged 1.542 g of cupric chloride dihydrate, 26.312 g of tri-n-octylmethylammonium chloride, 58.880 g of N,N,N',N'-tetramethylpropanediamine, 17.082 g of di-n-butylamine, 1007 g of n-butanol, 1343 g of methanol, 4365 g of a mixed xylene, 1700 g of 2,6-dimethylphenol and 51 g of an organoclay (trade name: BENTON$^R$ 2010, an organized bentonite produced by Elementis Specialties Inc. USA, the organizing agent: benzyl methyl di-hydrogenated tallow ammonium salt, the ignition loss: 40% by mass, the interlayer distance d(001) = 20 Å, and the organic processing amount: 136 meq/100 g) while injecting a nitrogen gas at a flow rate of approximately 500 ml/min, and the mixture was stirred to form a uniform solution and was further successively stirred for two hours by increasing the internal temperature of the reactor to 40°C.

Subsequently, introduction of an oxygen gas was started to the polymerization tank at a flow rate of 1560 Nml/min under vigorous stirring, and polymerization was carried out by controlling so that the internal temperature of the reactor is 40°C while aerating for 278 minutes. In addition, in the polymerization mixture, a polymer was confirmed to precipitate after 139 minutes from the start of feeding the oxygen gas and took a slurry form. Further, the form of a polymerization solution at the time of completion of the polymerization was precipitation polymerization. Thereafter, the aeration with the oxygen gas was stopped and to the polymerization mixture was added 13.0 g of a 50% aqueous solution of ethylenediamine tetraacetic acid trisodium salt (a reagent produced by Dojindo Laboratories), and the polymerization mixture was successively stirred for 60 minutes. Subsequently, hydroquinone (a reagent produced by Wako Pure Chemical Industries, Ltd.) was added in small amounts and stirring was continued until a slurry polyphenylene ether-organoclay composite becomes white color. The internal temperature of the reactor was controlled to be 40°C.

The polymerization mixture thus prepared was filtered, and the resulting filtered residue, a wet polyphenylene ether-organoclay composite was charged, together with 5950 g of methanol, into a 10-L washing tank and stirred for 30 minutes, followed by filtering again to obtain a wet polyphenylene ether-organoclay composite. At that time, the internal temperature of the washing tank was controlled to be 40°C. The operation was repeated three times, followed by drying the resulting wet polyphenylene ether-organoclay composite at 140°C for 240 minutes to obtain a powder of a polyphenylene ether-orcanoclay composite. The polyphenyl ether in the resulting polyphenylene ether-organoclay composite had a reduced viscosity of 0.47 dl/g.

And, there were blended 51.6 parts by mass of the resulting polyphenylene ether-organoclay composite, 24.2 parts by mass of high-impact polystyrene (trade name: PS6200, produced by NOVA Chemicals Inc., USA) and 24.2 parts by mass of general purpose polystyrene (trade name: Styron 660, produced by Dow Chemical Co., USA), and the resulting

mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to prepare a resin mixture composition pellet. As a measurement result, the resin mixture composition pellet had an ash content of 0.901% (1.746% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether organoclay composite. The physical properties test results of the resin molded product (test specimen) are shown in Table 1.

[Example 4]

There was used a 10-L jacketed polymerization tank equipped with, at the bottom of the reactor, a sparger for introducing an oxygen-containing gas, a stirring turbine blade and a baffle, and, in a vent gas line at the upper portion of the reactor, a reflux condenser. Firstly, to this polymerization tank were charged 1.256 g of cupric chloride dihydrate, 42.864 g oftri-n-octylmethylammonium chloride, 47.957 g of N,N,N',N'-tetramethylpropanediamine, 12.058 g of di-n-butylamine, 1004 g of n-butanol, 1339 g of methanol, 4352 g of a mixed xylene, 1200 g of 2,6-dimethylphenol and 120 g of an organoclay (trade name: BENTON$^R$ 2010, an organized bentonite produced by Elementis Specialties Inc. USA, the organizing agent: benzyl methyl di-hydrogenated tallow ammonium salt, the ignition loss: 40% by mass, the interlayer distance d(001) = 20 Å, and the organic processing amount: 136 meq/100 g) while injecting a nitrogen gas at a flow rate of approximately 500 ml/min, and the mixture was stirred to form a uniform solution and was further successively stirred for two hours by increasing the internal temperature of the reactor to 40°C.
Subsequently, introduction of an oxygen gas was started to the polymerization tank at a flow rate of 1560 Nml/min under vigorous stirring, and polymerization was carried out by controlling so that the internal temperature of the reactor is 40°C while aerating for 450 minutes. In addition, in the polymerization mixture, a polymer was confirmed to precipitate after 150 minutes from the start of feeding the oxygen gas and took a slurry form. Further, the form of a polymerization solution at the time of completion of the polymerization was precipitation polymerization. Thereafter, the aeration with the oxygen gas was stopped and to the polymerization mixture was added 13.0 g of a 50% aqueous solution of ethylenediamine tetraacetic acid trisodium salt (a reagent produced by Dojindo Laboratories), and the polymerization mixture was successively stirred for 60 minutes. Subsequently, hydroquinone (a reagent produced by Wako Pure Chemical Industries, Ltd.) was added in small amounts and stirring was continued until a slurry polyphenylene ether-organoclay composite becomes white color. The internal temperature of the reactor was controlled to be 40°C.
The polymerization mixture thus prepared was filtered, and the resulting filtered residue, a wet polyphenylene ether-organoclay composite was loaded, together with 4200 g of methanol, into a 10-L washing tank and stirred for 30 minutes, followed by filtering again to obtain a wet polyphenylene ether-organoclay composite. At that time, the internal temperature of the washing tank was controlled to be 40°C. The operation was repeated three times, followed by drying the resulting wet polyphenylene ether-organoclay composite at 140°C for 480 minutes to obtain a powder of a polyphenylene ether-organoclay composite. The polyphenyl ether in the resulting polyphenylene ether-organoclay composite had a reduced viscosity of 0.47 dl/g.
And, there were blended 56.2 parts by mass of the resulting polyphenylene ether-organoclay composite, 21.9 parts by mass of high-impact polystyrene (trade name: PS6200, produced by NOVA Chemicals Inc., USA) and 21.9 parts by mass of general purpose polystyrene (trade name: Styron 660, produced by Dow Chemical Co., USA), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to prepare a resin mixture composition pellet. As a measurement result, the resin mixture composition pellet had an ash content of 3.069% (5.460% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether organoclay composite. The physical properties test results of the resin molded product (test specimen) are shown in Table 1.

[Comparative Example 1]

There were blended 100 parts by mass of a poly(2,6-dimethyl-1,4-phenylene)ether powder having a reduced viscosity (chloroform solvent, 30°C) of 0.42 dl/g and 1 part by mass of an organoclay (trade name: BENTON$^R$ 2010, an organized bentonite produced by Elementis Specialties Inc. USA, the organizing agent: benzyl methyl di-hydrogenated tallow ammonium salt, the ignition loss: 40% by mass, the interlayer distance d(001) = 20 Å, and the organic processing

amount: 136 meq/100 g), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 450 rpm to prepare a polyphenylene ether-organoclay composite (pellet) by a melt intercalation method. The polyphenyl ether in the resulting polyphenylene ether-organoclay composite (pellet) had a reduced viscosity of 0.50 dl/g
And, there were blended 51.6 parts by mass of the resulting polyphenylene ether-organoclay composite (pellet) by a melt intercalation method, 24.2 parts by mass of high-impact polystyrene (trade name: PS6200, produced by NOVA Chemicals Inc., USA) and 24.2 parts by mass of general purpose polystyrene (trade name: Styron 660, produced by Dow Chemical Co., USA), and the mixture was melt-kneaded by using a twin-screw extruder, PCM30 (manufactured by Ikegai Iron Works, Ltd., a screw pattern having; the barrel number: 8, the screw diameter: 30 mm, the kneading disc L: 2 pieces, the kneading disc R: 3 pieces, sealing: 1 piece) under the conditions of a barrel setting temperature of 300°C and a screw rotation number of 150 rpm to obtain a resin mixture composition pellet. As a measurement result, the resin mixture composition pellet had an ash content of 0.305% (0.591% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether organoclay composite. The physical properties test results of the resin molded product (test specimen) are shown in Table 2.

[Comparative Example 2]

There was prepared a polyphenylene ether-organoclay composite (pellet) by a melt intercalation method by operating in the same manner as in Comparative Example 1 except for changing the amount added of an organoclay to 3 parts by mass. The polyphenyl ether in the resulting polyphenylene ether-organoclay composite (pellet) had a reduced viscosity of 0.50 dl/g.
And, there were blended 51.6 parts by mass of the resulting polyphenylene ether-organoclay composite (pellet) by a melt intercalation method, 24.2 parts by mass of high-impact polystyrene (trade name: PS6200, produced by NOVA Chemicals Inc., USA) and 24.2 parts by mass of general purpose polystyrene (trade name: Styron 660, produced by Dow Chemical Co., USA), and the resulting mixture was melt-kneaded under the same conditions as in Comparative Example 1 by using a twin-screw extruder, PCM30 used in Comparative Example 1 to prepare a resin mixture composition pellet. As a measurement result, the resin mixture composition pellet had an ash content of 0.906% (1.756% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether-organoclay composite. The physical properties test results of the resin molded product (test specimen) are shown in Table 2.

[Comparative Example 3]

There were blended 51 parts by mass of a poly(2,6-dimethyl-1,4-phenylene)ether powder having a reduced viscosity (chloroform solvent, 30°C) of 0.42 dl/g, 24.5 parts by mass of high-impact polystyrene (trade name: PS6200, produced by NOVA Chemicals Inc., USA) and 24.5 parts by mass of general purpose polystyrene (trade name: Styron 660, produced by Dow Chemical Co., USA), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to prepare a resin mixture composition pellet not containing a polyphenylene ether-organoclay composite.
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) not containing a polyphenylene ether-organoclay composite. The physical properties test results of the resin molded product (test specimen) are shown in Table 2.

[Example 5]

There were blended 51.6 parts by mass of the polyphenylene ether-organoclay composite obtained in Example 3, 38.4 parts by mass of high-impact polystyrene (trade name: PS6200, produced by NOVA Chemicals Inc., USA), 7 parts by mass of a styrene-based elastomer (trade name: Tuflec H1271, produced by Asahikasei Chemicals Corp.) and 3 parts by mass of a phosphoric acid ester-based plasticizer (trade name: TPP, produced by Daihachi Chemical Industry

Co., Ltd.) and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to obtain a resin mixture composition pellet. As a measurement result, the resin mixture composition pellet had an ash content of 0.901 wt% (1.746% in terms of in the composite). The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether-organoclay composite. The physical properties test results of the resin molded product (test specimen) are shown in Table 3.

[Comparative Example 4]

There was prepared a resin mixture composition pellet by operating in the same manner as in Example 5 except for using the polyphenylene ether-organoclay composite by a melt intercalation method obtained in Comparative Example 2. As a measurement result, the resin mixture composition pellet had an ash content of 0.900 wt% (1.744% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polyphenylene ether-organoclay composite. The physical properties test results of the resin molded product (test specimen) are shown in Table 3.

[Comparative Example 5]

There were blended 50 parts by mass of a poly(2,6-dimethyl-1,4-phenylene)ether powder having a reduced viscosity (chloroform solvent, 30°C) of 0.42 dl/g, 40 parts by mass of high-impact polystyrene (trade name: PS6200, produced by NOVA Chemicals Inc., USA), 7 parts by mass of a styrene-based elastomer (trade name: Tuflec H1271, produced by Asahikasei Chemicals Corp.) and 3 pats by mass of a phosphoric acid ester-based plasticizer (trade name: TPP, produced by Daihachi Chemical Industry Co., Ltd.), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 300°C and a screw rotation number of 250 rpm to prepare a resin mixture composition pellet not containing a polyphenylene ether-organoclay composite.
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) not containing a polyphenylene ether-organoclay composite. The physical properties test results of the resin molded product (test specimen) are shown in Table 3.

[Example 6]

To a solution tank were charged 1370 g of 2,2-bis(4-hydroxyphenyl)propane and 1348 g of diphenylcarbonate and the mixture was dissolved at 150°C while injecting nitrogen at a flow rate of approximately 500 ml/min. Thereafter, while stirring the melted mixture in the solution tank, there was blended 47.7 g of an organoclay (trade name: BENTON$^R$ 1651, organized bentonite produced by Elementis Specialties Inc. USA, the organizing agent: benzyl methyl dihydrogenated tallow ammonium salt, the ignition loss: 50% by mass, the interlayer distance d(001) = 36 Å, and the organic processing amount: 142 meq/100 g), followed by stirring for further one hour.
Subsequently, the melted mixture in the solution tank was transferred into a vertical stirred tank equipped with a rectifying column, and into the stirring tank were added 0.032 g of disodium salt of bisphenol A and 0.046 g of tetramethylammoniumhydroxide, followed by performing reaction at a reaction temperature of 180°C and a reaction pressure of 100 Torr while removing the generated phenol and further followed by performing initial polymerization by setting the reaction temperature at 200°C and the reaction pressure at 30 Torr.
Then, a polymer after the initial polymerization was fed into a vertical stirred tank which is not equipped with a rectifying column at 270°C and 1 Torr, and to the stirring tank was added 0.032 g of dodecylbenzene sulfonic acid tetrabutylphosphonium salt, followed by melting and mixing for 45 minutes to pelletize all of the mixture, thereby obtaining a polycarbonate-organoclay composite (pellet). The aromatic polycarbonate in the resulting polycarbonate-organoclay composite (pellet) had an intrinsic viscosity of 0.348 dl/g.
And, there were blended 51.6 parts by mass of the resulting polycarbonate-organoclay composite (pellet) and 48.4 parts by mass of an ABS resin (trade name: Styrac 121, produced by Asahikasei Chemicals Corp.), and the resulting mixture was melt-kneaded by using a twin-screw extruder, ZSK25 (manufactured by Werner & Pfleiderer GmbH, Germany, a

screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 280°C and a screw rotation number of 250 rpm to prepare a resin mixture composition pellet. As a measurement result, the resin mixture composition pellet had an ash content of 0.751% (1.456% in terms of in the composite).
The resulting resin mixture composition pellet was injection molded using an injection molding machine, IS-80C (the molding temperature of 260°C, the die temperature of 70°C), manufactured by Toshiba Machine Co., Ltd., to form a resin molded product (resin composition) containing a polycarbonate-organoclay composite. The physical properties test results of the resin molded product (test specimen) are shown in Table 4.

[Comparative Example 6]

There was obtained a pellet of a polycarbonate having an intrinsic viscosity (a value measured at 30°C in a methylene chloride solution in which the concentration of the resulting polycarbonate is 0.7 g/dl) of 0.341 dl/g by operating in the same manner as in Example 6 except that an organoclay was not added.
And there were dry blended 100 parts by mass of the pellet of resulting polycarbonate and 3 parts by mass of an organoclay (trade name: BENTON$^R$ 1651, organized bentonite produced by Elementis Specialties Inc. USA, the organizing agent: benzyl methyl di-hydrogenated tallow ammonium salt, the ignition loss: 50% by mass, the interlayer distance d(001) = 36 Å, and the organic processing amount: 142 meq/100 g), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 280°C and a screw rotation number of 450 rpm to prepare a polycarbonate-organoclay composite (pellet) by a melt intercalation method. The aromatic polycarbonate in the resulting polycarbonate-organoclay composite (pellet) had an intrinsic viscosity of 0.359 dl/g.
And, there were blended 51.6 parts by mass of the resulting polycarbonate-organoclay composite (pellet) by a melt intercalation method and 48.4 parts by mass of an ABS resin (trade name: Styrac 121, produced by Asahikasei Chemicals Corp.), and the resulting mixture was melt-kneaded by using a twin-screw extruder, PCM30 (manufactured by Ikegai Iron Works, Ltd., a screw pattern having; the barrel number: 8, the screw diameter: 30 mm, the kneading disc L: 2 pieces, the kneading disc R: 3 pieces, sealing: 1 piece) under the conditions of a barrel setting temperature of 280°C and a screw rotation number of 150 rpm to obtain a resin mixture composition pellet. As a measurement result, the resin mixture composition pellet had an ash content of 0.752% (1.457% in terms of in the composite).
The resulting resin mixture composition pellet was injection molded using an injection molding machine, IS-80C (the molding temperature of 290°C, the die temperature of 80°C), manufactured by Toshiba Machine Co., Ltd., to form a resin molded product (resin composition) containing a polycarbonate-organoclay composite. The physical properties test results of the resin molded product (test specimen) are shown in Table 4.

[Comparative Example 7]

There were blended 50 parts by mass of the pellet of the polycarbonate obtained in Comparative Example 6 and 50 parts by mass of an ABS resin (trade name: Styrac 121, produced by Asahikasei Chemicals Corp.), and the resulting mixture was melt-kneaded by using a twin-screw extruder, ZSK25 (manufactured by Werner & Pfleiderer GmbH, Germany, a screw pattern having; the barrel number: 10, the screw diameter: 25 mm, the kneading disc L: 2 pieces, the kneading disc R: 6 pieces, the kneading disc N: 2 pieces) under the conditions of a barrel setting temperature of 280°C and a screw rotation number of 250 rpm to prepare a resin mixture composition pellet not containing a polycarbonate-organoclay composite.
The resulting resin mixture composition pellet was injection molded using an injection molding machine, IS-80C (the molding temperature of 260°C, the die temperature of 70°C), manufactured by Toshiba Machine Co., Ltd., to form a resin molded product (resin composition) not containing a polycarbonate-organoclay composite. The physical properties test results of the resin molded product (test specimen) are shown in Table 4.
[Table 1]

| | Ex.1 | Ex.2 | Ex. 3 | Ex.4 |
|---|---|---|---|---|
| Dispersion method of organoclay in PPE | Catalyst component added during polymerization HCl | Addition during polymerization TOMAC | Addition during polymerization TOMAC | Addition during polymerization TOMAC |

(continued)

| | Ex.1 | Ex.2 | Ex. 3 | Ex.4 |
|---|---|---|---|---|
| Amount added of organoclay (Based on 100 parts by mass of PPE) | 1 | 1 | 3 | 10 |
| (X-ray diffraction) (%)<br>* Corresponding to a in Formula (I) | 2.53 | 1.43 | 4.3 | 13.0 |
| Formula (I) = (a/α) [b/(1-α)] | 4.34 | 2.39 | 2.45 | 2.59 |
| Ash content in composite (wt%) * Corresponding to α in Formula (I) | 0.595 | 0.599 | 1.746 | 5.460 |
| PPE reduction viscosity of PPE-organoclay composite (η sp/c) | 0.42 | 0.42 | 0.47 | 0.47 |
| (Blending) Parts by mass<br>PPE/Orgailoclay<br>HIPS<br>GPPS | <br>51.6<br>24.2<br>24.2 | <br>51.6<br>24.2<br>24.2 | <br>51.6<br>24.2<br>24.2 | <br>56.2<br>21.9<br>21.9 |
| (Flammability)<br>Burning dripping number ( /5 specimens)<br>Average burning second (sec)<br>Maximum burning second (sec)<br>(Light resistance)<br>ΔE after 300 hours of xenon radiation<br>(Chemical resistance)<br>TY retention after immersed in solvent (%) | <br>0<br>18<br>35<br><br>-<br><br>- | <br>0<br>13<br>22<br><br>-<br><br>- | <br>0<br>8<br>14<br><br>9<br><br>95 | <br>0<br>2<br>4<br><br>-<br><br>- |

[Table 2]

| | Com. Ex. I | Com. Ex. 2 | Com. Ex. 3 |
|---|---|---|---|
| Dispersion method of organoclay in PPE | Dry blending during extrusion | | - |
| Amount added of organoclay (Based on 100 parts by mass of PPE) | 1 | 3 | 0 |
| Peak area ratio of clay to polymer (X-ray diffraction) (%) | 4.22 | 12.8 | - |

(continued)

| | Com. Ex. I | Com. Ex. 2 | Com. Ex. 3 |
|---|---|---|---|
| * Corresponding to a in Formula (I) | | | |
| Formula (I) = (a/α)[b/(1-α)] | 7.38 | 7.98 | - |
| Ash content in composite (wt%) * Corresponding to α in Formula (I) | 0.591 | 1.756 | - |
| PPE reduction viscosity of PPE-organoclay composite (η sp/c) | 0.50 | 0.50 | - |
| (Blending) Parts by mass<br>PPE/Organoclay<br>HIPS<br>GPPS | <br>51.6<br>24.2<br>24.2 | <br>51.6<br>24.2<br>24.2 | <br>51<br>24.5<br>24.5 |
| (Flammability)<br>Burning dripping number ( /5 specimens)<br>Average burning second (sec)<br>Maximum burning second (sec)<br>(Light resistance)<br>ΔE after 300 hours of xenon radiation<br>(Chemical resistance)<br>TY retention after immersed in solvent (%) | <br>3*<br>41<br>79<br><br>-<br><br>- | <br>4*<br>45<br>88<br><br>18<br><br>50 | <br>5*<br>Unmeasurable<br>Unmeasurable<br><br>22<br><br>27 |
| * All the specimens dripped flaming materials by the first flame application. | | | |

[Table 3]

| | Ex. 5 | Com. Ex. 4 | Com. Ex. 5 |
|---|---|---|---|
| Dispersion method of organoclay in PPE | Addition during polymerization | Dry blending during extrusion | - |
| Amount added of organoclay (Based on 100 parts by mass of PPE) | 3 | 3 | 0 |
| Peak area ratio of clay to polymer (X-ray diffraction) (%)<br>* Corresponding to a in Fonnula (I) | 4.3 | 12.8 | - |
| Fonnula (I) = (a/α)[b/(l-α)] | 2.45 | 7.98 | - |
| Ash content in composite (wt%)<br>* Corresponding to α in Formula (I) | 1.746 | 1.744 | - |
| PPE reduction viscosity of PPE-organoclay composite (η sp/c) | 0.47 | 0.50 | - |
| (Blending) Parts by mass<br>PPE/Organoclay<br>HIPS<br>Elastomer<br>TPP | <br>51.6<br>38.4<br>7<br>3 | <br>51.6<br>38.4<br>7<br>3 | <br>50<br>40<br>7<br>3 |
| (Flammability)<br>Burning dripping number ( /5 specimens)<br>Average burning second (sec) | <br>0<br>6 | <br>3*<br>38 | <br>5*<br>Unmeasurable |

(continued)

| | Ex. 5 | Com. Ex. 4 | Com. Ex. 5 |
|---|---|---|---|
| Maximum burning second (sec) | 11 | 59 | Unmeasurable |
| (Impact Resistance) | | | |
| Falling-Weight Impact Strength (J) | 44 | 39 | 30 |
| (Sheet Extrudability) | | | |
| Gas generation condition (visual evaluation) | Small | Slightly large | Large |
| Generation of materials adhered to sheet (visual evaluation) | No | Yes | Yes |
| Sheet appearance (visual evaluation) | O | × | × |
| * All the specimens dripped flaming materials by the first flame application. | | | |

[Table 4]

| | Ex. 6 | Com. Ex. 6 | com. Ex. 7 |
|---|---|---|---|
| Dispersion method of organoclay in PC | Addition during polymerization | Dry blending during extrusion | - |
| Amount added of organoclay (Based on 100 parts by mass of PC) | 3 | 3 | 0 |
| PC intrinsic viscosity of PC-organoclay composite (η sp/c) | 0.348 | 0.359 | - |
| (Blending) Parts by mass | | | |
| PC/organoclay | 51.6 | 51.6 | 50 |
| ABS | 48.4 | 48.4 | 50 |
| (Flammability) | | | |
| Burning dripping number ( /5 specimens) | 0 | 5* | 5* |
| Average burning second (sec) | 12 | Unmeasurable | Unmeasurable |
| Maximum burning second (sec) | 20 | Unmeasurable | Unmeasurable |
| (Impact Resistance) | | | |
| Falling-weight impact strength (J) | 57 | 6 | 45 |
| * All the specimens dripped flaming materials by the first flame application. | | | |

Industrial Applicability

The polymer-(organo)clay composite of the present invention and a process for producing thereof may be used for various applications as a novel functional material which has not conventionally existed by taking advantage of the properties thereof, and, in addition, may be suitably used for various machine components, automobile components, electric and electronic components, especially in the field of a sheet and a film and the like, which require flame retardancy, durability, melt dripping preventing capability, gas barrier properties and the like.

Brief Description of the Drawings

Figure 1 is an explanation drawing illustrating a measurement technique of an X-ray diffraction measurement;
Figure 2 is an explanation drawing illustrating an X-ray two-dimensional scattering pattern in an X-ray diffraction measurement; and
Figure 3 is an explanation drawing illustrating a one-dimensional profile in an X-ray diffraction measurement.

## Claims

**1.** A process for production of a polyphenylene ether-organoclay composite by oxidative polymerization of a phenolic compound using an oxygen-containing gas in the presence of a solvent and a catalyst, the process comprising:

a step of preparing a mixture comprising the solvent, the catalyst, the phenolic compound and an organoclay in which the organoclay is contained in an amount of 0.1 to 20 parts by mass based on 100 parts by mass of the phenolic compound;
a step of oxidatively-polymerizing the phenolic compound by contacting the mixture with the oxygen-containing gas; and
a step of separating the solvent and the catalyst from the resulting polymerization mixture to obtain the polyphenylene ether-organoclay composite.

**2.** The process for production of the polyphenylene ether-organoclay composite according to claim 1, wherein the catalyst contains a copper compound, a halogen compound and a diamine compound represented by the following general formula (1).

[Formula 1]

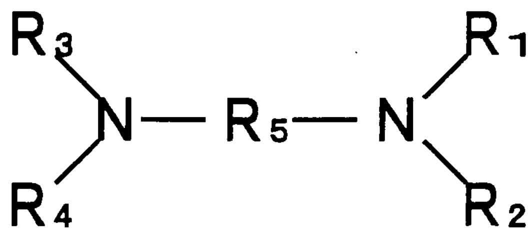

· · · (1)

(wherein $R_1$, $R_2$, $R_3$ and $R_4$ each independently represents a hydrogen atom or a linear or branched alkyl group having 1 to 6 carbon atoms with the proviso that all of $R_1$ to $R_4$ do not represent a hydrogen atom at the same time. $R_5$ represents a linear or methyl-branched alkylene group having 2 to 5 carbon atoms.)

**3.** The process for production of the polyphenylene ether-organoclay composite according to claim 1 or 2, wherein the organoclay is lamellar silicate organized with organic onium salt.

**4.** The process for production of the polyphenylene ether-organoclay composite according to any one of claims 1 to 3, wherein the organoclay is lamellar silicate organized with quaternary ammonium salt.

**5.** The process for production of the polyphenylene ether-organoclay composite according to any one of claims 1 to 4, wherein the organoclay is bentonite or hectorite organized with quaternary ammonium salt having at least one aromatic ring in a molecular structure.

**6.** The process for production of the polyphenylene ether-organoclay composite according to any one of claims 1 to 5, wherein the organoclay has an ignition loss (the ratio of the weight loss after heating at 600°C for 5 hours to the original mass) of 40 to 60% by mass.

**7.** The process for production of the polyphenylene ether-organoclay composite according to any one of claims 1 to 6, wherein the organoclay has an interlayer distance of 20 to 60 Å.

**8.** The process for production of the polypheriylene ether-organoclay composite according to any one of claims 1 to 7, wherein the phenolic compound is 2,6-dimethylphenol or a mixture of 2,6-dimethylphenol and 2,3,6-trimethylphenol.

**9.** The process for production of the polyphenylene ether-organoclay composite according to any one of claims 2 to 8, wherein the halogen compound is an ammonium chloride compound or an ammonium bromide compound.

**10.** The process for production of the polyphenylene ether-organoclay composite according to any one of claims 2 to 8, wherein the halogen compound is halogenated tri-n-octylmethylammonium.

**11.** The process for production of the polyphenylene ether-organoclay composite according to any one of claims 2 to 10, wherein the diamine compound is N,N'-di-t-butylethylenediamine or N,N,N',N'-tetramethylpropanediamine.

**12.** The process for production of the polyphenylene ether-organoclay composite according to any one of claims 1 to 11, wherein the mixture contains the organoclay in an amount of 0.5 to 10 parts by mass based on 100 parts by mass of the phenolic compound.

**13.** The process for production of the polyphenylene ether-organoclay composite according to any one of claims 1 to 11, wherein the mixture contains the organoclay in an amount of 1 to 5 parts by mass based on 100 parts by mass of the phenolic compound.

**14.** The process for production of the polyphenylene ether-organoclay composite according to any one of claims 1 to 13, wherein the solvent is an aromatic hydrocarbon and the polymerization mixture is dissolved the polyphenylene ether in the aromatic hydrocarbon.

**15.** The process for production of the polyphenylene ether-organoclay composite according to any one of claims 1 to 13, wherein the solvent is a mixed solvent of an aromatic hydrocarbon and an alcohol having 1 to 6 carbon atoms, and the polymerization mixture is a slurry in which the polyphenylene ether is precipitated in the mixed solvent.

**16.** The process for production of the polyphenylene ether-organoclay composite according to claim 14 or 15, wherein the aromatic hydrocarbon is at least one kind selected from the group consisting of toluene, xylene and ethylbenzene.

**17.** The process for production of the polyphenylene ether-organoclay composite according to claim 15 or 16, wherein the alcohol is at least one kind selected from the group consisting of methanol, ethanol, propanol, butanol and pentanol, and a mass ratio of the aromatic hydrocarbon to the alcohol is from 90:10 to 5:95.

**18.** The process for production of the polyphenylene ether-organoclay composite according to any one of claims 1 to 17, wherein in the step of preparing the mixture, the organoclay is added in the solvent and/or the phenolic compound in advance so as to disperse the organoclay.

**19.** The process for production of the polyphenylene ether-organoclay composite according to any one of claims 1 to 18, wherein in the step of preparing the mixture, the organoclay is added in the phenolic compound heated at 50 to 200°C in advance so as to disperse the organoclay.

**20.** A polyphenylene ether-organoclay composite obtainable by the production process according to any one of claims 1 to 19,
wherein a reduced viscosity (as measured in 0.5 g/dl chloroform solution at 30°C using an Ubbelohde viscometer) of the polyphenylene ether is in a range of 0.2 to 0.9 dl/g.

**21.** A composition comprising the polyphenylene ether-organoclay composite according to claim 20 and a thermoplastic resin.

**22.** A sheet-like material comprising the polyphenylene ether-organoclay composite according to claim 20 or the composition according to claim 21.

**23.** A polyphenylene ether-(organo)clay composite **characterized by** satisfying the following formula (I) when an X-ray diffraction measurement is made by directing an X-ray from the cross-sectional surface (the thickness direction) of a flat plate obtainable by press molding, a normal line direction of a pressed flat plate of the resulting two dimensional

scattering pattern is assumed to be 0°, a maximum value of a peak derived from the (organo)clay in the one-dimensional profile calculated by sector averaging in a range of -15° to 15° is present in a range of 2θ = 3° to 7°, and a ratio of a peak area derived from the (organo)clay is defined as a (%), a ratio of the peak area derived from the polyethylene ether is defined as b (%) when a total of the peak area derived from the (organo)clay and the peak area derived from the polyethylene ether is assumed to be 100%, and a ratio of the (organo)clay is defined as α when a total composite mass of the polyethylene ether and the (organo)clay is defined as 1.

$$(a/\alpha)/[b/(1-\alpha)] \leq 5 \ldots \text{(I)}$$

**24.** A process for production of a polymer-(organo)clay composite, the process comprising:

a step of preparing a mixture containing a monomer having an aromatic ring in a monomer unit and an (organo) clay in which the (organo)clay is contained in an amount of 0.1 to 20 parts by mass based on 100 parts by mass of the monomer; and
a step of polymerizing the monomer in the mixture to prepare a thermoplastic resin having a glass transition temperature (Tg) of 150°C or higher and having an aromatic ring in a constitutional unit.

**25.** The process for production of the polymer-(organo)clay composite according to claim 24,
wherein the thermoplastic resin is at least one kind selected from the group consisting of polyphenylene ether, aromatic polycarbonate, polyetherimide and polyarylate.

**Amended claims under Art. 19.1 PCT**

**1.** (Amended) A process for production of a polyphenylene ether-organoclay composite by oxidative polymerization of a phenolic compound using an oxygen-containing gas in the presence of a solvent and a catalyst, the process comprising:

a step of preparing a mixture comprising the solvent, the catalyst containing a copper compound, a halogen compound and a diamine compound represented by the general formula (1), the phenolic compound, and an organoclay in which the organoclay is lamellar silicate organized with organic onium salt and the organoclay is contained in an amount of 0.1 to 20 parts by mass based on 100 parts by mass of the phenolic compound;
a step of oxidatively-polymerizing the phenolic compound by contacting the mixture with the oxygen-containing gas; and
a step of separating the solvent and the catalyst from the resulting polymerization mixture to obtain the polyphenylene ether-organoclay composite.

[Formula 1]

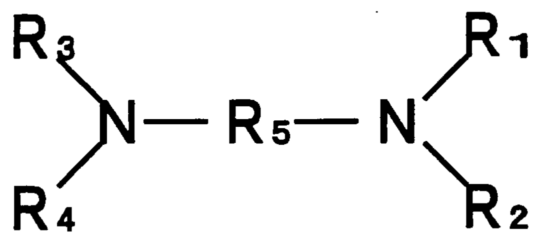

· · · (1)

(wherein $R_1$, $R_2$, $R_3$ and $R_4$ each independently represents a hydrogen atom or a linear or branched alkyl group having 1 to 6 carbon atoms with the proviso that all of $R_1$ to $R_4$ do not represent a hydrogen atom at the same time. $R_5$ represents a linear or methyl-branched alkylene group having 2 to 5 carbon atoms.)

**2.** (Deleted)

**3.** (Deleted)

**4.** (Amended) The process for production of the polyphenylene ether-organoclay composite according to claim 1, wherein the organoclay is lamellar silicate organized with quaternary ammonium salt.

**5.** (Amended) The process for production of the polyphenylene ether-organoclay composite according to claim 1 or 4, wherein the organoclay is bentonite or hectorite organized with quaternary ammonium salt having at least one aromatic ring in a molecular structure.

**6.** (Amended) The process for production of the polyphenylene ether-organoclay composite according to any one of claims 1, 4 and 5,
wherein the organoclay has an ignition loss (the ratio of the weight loss after heating at 600°C for 5 hours to the original mass) of 40 to 60% by mass.

**7.** (Amended) The process for production of the polyphenylene ether-organoclay composite according to any one of claims 1 and 4 to 6,
wherein the organoclay has an interlayer distance of 20 to 60 Å.

**8.** (Amended) The process for production of the polyphenylene ether-organoclay composite according to any one of claims 1 and 4 to 7,
wherein the phenolic compound is 2,6-dimethylphenol or a mixture of 2,6-dimethylphenol and 2,3,6-trimethylphenol.

**9.** (Amended) The process for production of the polyphenylene ether-organoclay composite according to any one of claims 1 and 4 to 8,
wherein the halogen compound is an ammonium chloride compound or an ammonium bromide compound.

**10.** (Amended) The process for production of the polyphenylene ether-organoclay composite according to any one of claims 1 and 4 to 8,
wherein the halogen compound is halogenated tri-n-octylmethylammonium.

**11.** (Amended) The process for production of the polyphenylene ether-organoclay composite according to any one of claims 1 and 4 to 10,
wherein the diamine compound is N,N'-di-t-butylethylenediamine or N,N,N',N'-tetramethylpropanediamine.

**12.** (Amended) The process for production of the polyphenylene ether-organoclay composite according to any one of claims 1 and 4 to 11,
wherein the mixture contains the organoclay in an amount of 0.5 to 10 parts by mass based on 100 parts by mass of the phenolic compound.

**13.** (Amended) The process for production of the polyphenylene ether-organoclay composite according to any one of claims 1 and 4 to 11,
wherein the mixture contains the organoclay in an amount of 1 to 5 parts by mass based on 100 parts by mass of the phenolic compound.

**14.** (Amended) The process for production of the polyphenylene ether-organoclay composite according to any one of claims 1 and 4 to 13,
wherein the solvent is an aromatic hydrocarbon and the polymerization mixture is dissolved the polyphenylene ether in the aromatic hydrocarbon.

**15.** (Amended) The process for production of the polyphenylene ether-organoclay composite according to any one of claims 1 and 4 to 13,
wherein the solvent is a mixed solvent of an aromatic hydrocarbon and an alcohol having 1 to 6 carbon atoms, and the polymerization mixture is a slurry in which the polyphenylene ether is precipitated in the mixed solvent.

**16.** The process for production of the polyphenylene ether-organoclay composite according to claim 14 or 15,
wherein the aromatic hydrocarbon is at least one kind selected from the group consisting of toluene, xylene and ethylbenzene.

**17.** The process for production of the polyphenylene ether-organoclay composite according to claim 15 or 16, wherein the alcohol is at least one kind selected from the group consisting of methanol, ethanol, propanol, butanol and pentanol, and a mass ratio of the aromatic hydrocarbon to the alcohol is from 90:10 to 5:95.

**18.** (Amended) The process for production of the polyphenylene ether-organoclay composite according to any one of claims 1 and 4 to 17,
wherein in the step of preparing the mixture, the organoclay is added in the solvent and/or the phenolic compound in advance so as to disperse the organoclay.

**19.** (Amended) The process for production of the polyphenylene ether-organoclay composite according to any one of claims 1 and 4 to 18,
wherein in the step of preparing the mixture, the organoclay is added in the phenolic compound heated at 50 to 200°C in advance so as to disperse the organoclay.

**20.** (Amended) A polyphenylene ether-organoclay composite obtainable by the production process according to any one of claims 1 and 4 to 19,
wherein a reduced viscosity (as measured in 0.5 g/dl chloroform solution at 30°C using an Ubbelohde viscometer) of the polyphenylene ether is in a range of 0.2 to 0.9 dl/g.

**21.** A composition comprising the polyphenylene ether-organoclay composite according to claim 20 and a thermoplastic resin.

**22.** A sheet-like material comprising the polyphenylene ether-organoclay composite according to claim 20 or the composition according to claim 21.

**23.** A polyphenylene ether-(organo)clay composite **characterized by** satisfying the following formula (I) when an X-ray diffraction measurement is made by directing an X-ray from the cross-sectional surface (the thickness direction) of a flat plate obtainable by press molding, a normal line direction of a pressed flat plate of the resulting two dimensional scattering pattern is assumed to be 0°, a maximum value of a peak derived from the (organo)clay in the one-dimensional profile calculated by sector averaging in a range of -15° to 15° is present in a range of 2θ = 3° to 7°, and a ratio of a peak area derived from the (organo)clay is defined as a (%), a ratio of the peak area derived from the polyethylene ether is defined as b (%) when a total of the peak area derived from the (organo)clay and the peak area derived from the polyethylene ether is assumed to be 100%, and a ratio of the (organo)clay is defined as α when a total composite mass of the polyethylene ether and the (organo)clay is defined as 1.

$$(a/\alpha)/[b/(1-\alpha)] \leq 5 \quad \ldots (I)$$

FIG. 1

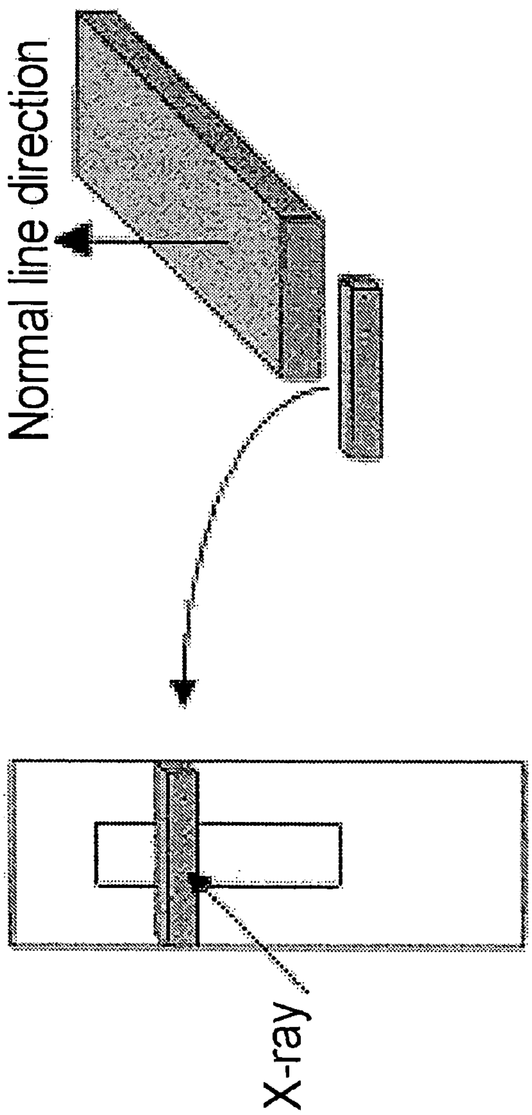

FIG.2

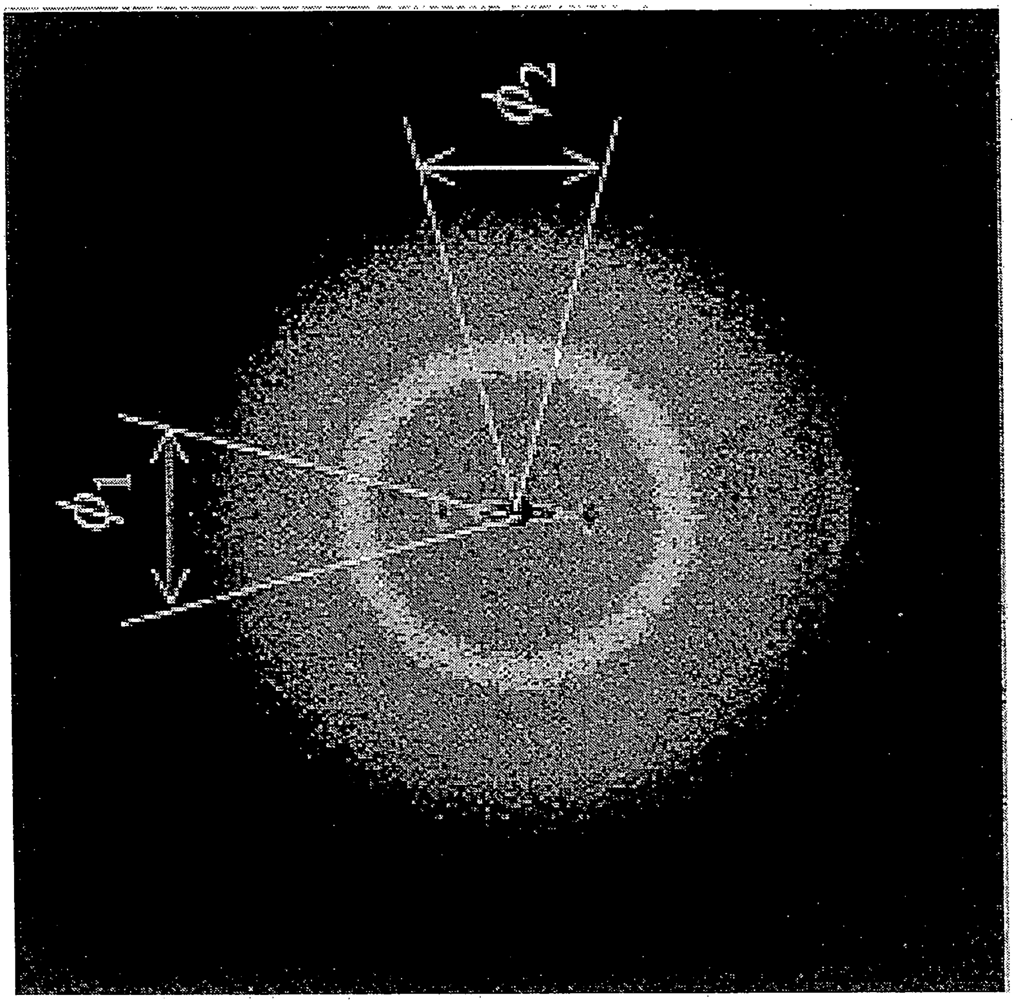


$-15° < \Phi_1 < 15°$

FIG.3

<One-dimensional average profile schematic view>

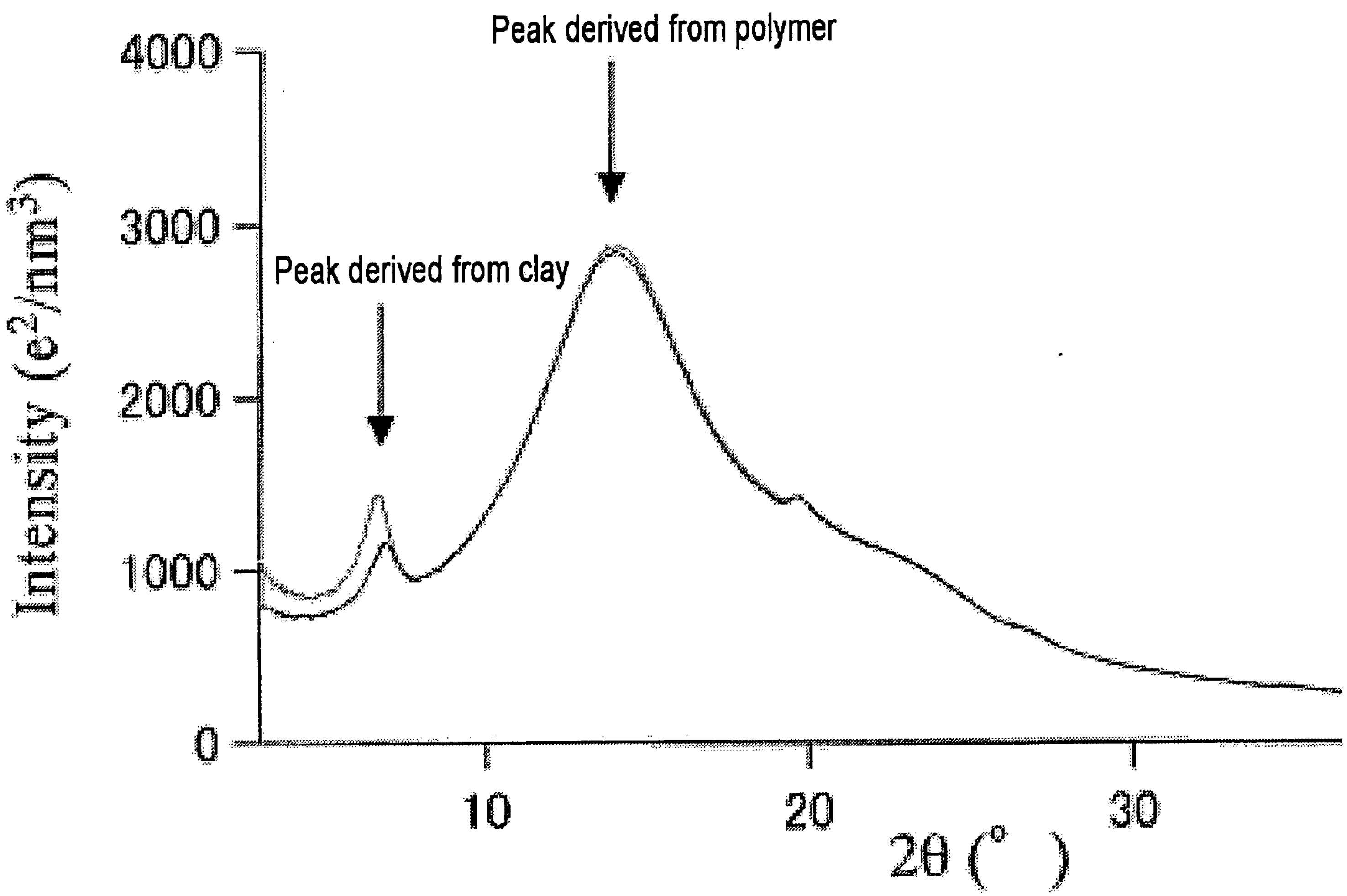

## INTERNATIONAL SEARCH REPORT

International application No.
PCT/JP2008/053075

A. CLASSIFICATION OF SUBJECT MATTER
*C08G65/44*(2006.01)i, *C08G63/78*(2006.01)i, *C08G64/02*(2006.01)i, *C08G73/10*(2006.01)i, *C08L69/00*(2006.01)i, *C08L71/12*(2006.01)i

According to International Patent Classification (IPC) or to both national classification and IPC

B. FIELDS SEARCHED

Minimum documentation searched (classification system followed by classification symbols)
C08G65/00-67/04, C08G63/78, C08G64/02, C08G73/10, C08L69/00, C08L71/00-71/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2000-290492 A (Kaneka Corp.), 17 October, 2000 (17.10.00), Claims; Par. Nos. [0008], [0022], [0031], [0036] to [0040], [0049], [0050], [0053], [0058], [0059], [0062] to [0064], [0066] to [0071], [0077], [0078], [0087], [0094] (Family: none) | 1,2,7,8, 11-25<br>1-23 |
| X<br><br>Y | JP 2000-290491 A (Kaneka Corp.), 17 October, 2000 (17.10.00), Claims; Par. Nos. [0001], [0007], [0019], [0038], [0039], [0054], [0059], [0064], [0066], [0067], [0071] to [0075], [0079], [0081] to [0084], [0094], [0102] (Family: none) | 1,2,7,8, 11-25<br>1-23 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 May, 2008 (08.05.08) | 20 May, 2008 (20.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No. PCT/JP2008/053075

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-131664 A (Asahi Kasei Chemicals Corp.), 25 May, 2006 (25.05.06), Claims; Par. Nos. [0003], [0004], [0017], [0018], [0027], [0029], [0039] (Family: none) | 3-6,9,10 |
| Y | JP 2006-306061 A (Asahi Kasei Chemicals Corp.), 09 November, 2006 (09.11.06), Claims 1, 5; Par. Nos. [0021], [0034], [0053] (Family: none) | 3-6,9,10 |
| Y | JP 2005-272533 A (Asahi Kasei Chemicals Corp.), 06 October, 2005 (06.10.05), Claims; Par. Nos. [0003], [0018] to [0020] (Family: none) | 3-6,9,10 |
| X<br>Y | JP 64-9202 A (Toyota Central Research and Development Laboratories, Inc.), 12 January, 1989 (12.01.89), Claims; page 3, upper right column, lines 7 to 17; page 4, upper right column, lines 7 to 20; page 4, lower right column, lines 18 to 20; page 5, upper left column, line 6 to upper right column, line 7 & US 4810734 A & DE 3810006 A | 24,25<br>1-23 |
| Y | JP 11-286542 A (Asahi Chemical Industry Co., Ltd.), 19 October, 1999 (19.10.99), Claims; Par. Nos. [0011], [0013] (Family: none) | 1-23 |
| X | JP 2000-136308 A (Toyota Central Research and Development Laboratories, Inc.), 16 May, 2000 (16.05.00), Claims; Par. Nos. [0001], [0003], [0004], [0007], [0014] to [0016], [0019], [0020], [0041] to [0046], [0052], [0053] (Family: none) | 24,25 |
| X | JP 2004-307720 A (Sekisui Chemical Co., Ltd.), 04 November, 2004 (04.11.04), Claims 1, 3, 9 to 11; Par. Nos. [0001], [0007], [0038], [0039], [0044] (Family: none) | 24,25 |
| X | JP 2004-323797 A (Sekisui Chemical Co., Ltd.), 18 November, 2004 (18.11.04), Claims; Par. No. [0051] (Family: none) | 24,25 |

Form PCT/ISA/210 (continuation of second sheet) (April 2007)

**INTERNATIONAL SEARCH REPORT**

International application No.
PCT/JP2008/053075

C (Continuation). DOCUMENTS CONSIDERED TO BE RELEVANT

| Category* | Citation of document, with indication, where appropriate, of the relevant passages | Relevant to claim No. |
|---|---|---|
| X | JP 7-166036 A (Co-op Chemical Co., Ltd., Mitsubishi Chemical Corp.), 27 June, 1995 (27.06.95), Claims; Par. No. [0025] (Family: none) | 24,25 |

Form PCT/ISA/210 (continuation of second sheet) (April 2007)

**INTERNATIONAL SEARCH REPORT**

International application No.
PCT/JP2008/053075

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

It is not defined that the invention of claim 23 can be produced by the method claimed in claim 1. Further, even though the common technical knowledge at the time of filing the present application is taken into the consideration, it cannot be considered that the invention of claim 23 means uniquely a product of the method claimed in claim 1. Thus, there is no same or corresponding matter which can be regarded as "a special technical feature" in the meaning within PCT Rule 13.2, second sentence, between claim 1 and claim 23.

The inventions of claims 24 and 25 are not novel, as disclosed in the documents cited in Box V (e.g., JP 2000-290492 A, JP 2000-290491 A, JP 64-9202 A,

(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

INTERNATIONAL SEARCH REPORT

International application No.
PCT/JP2008/053075

Continuation of Box No.III of continuation of first sheet(2)

JP 2000-136308 A, JP 2004-307720 A, JP 2004-323797 A, JP 7-166036 A). Therefore, the inventions of claims 24 and 25 have no "special technical feature" in the meaning within PCT Rule 13.2, second sentence.

Consequently, there is no technical relationship among the inventions of claims 1-25 involving one or more of the same or corresponding special technical features, and therefore these inventions are not considered to be so linked as to form a single general inventive concept.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S649202 B
- JP S63215775 B
- JP 2000136308 A
- JP 2004307720 A
- JP H07324160 B
- JP 2003026915 A
- JP S615492 B
- JP S6042451 B
- JP H5245199 B
- JP H5245200 B